# EUROPEAN PATENT APPLICATION

(11) **EP 3 940 849 A1**
(43) Date of publication of application: **19.01.2022**
(21) Application number: 20770379.4
(22) Date of filing: 12.03.2020
(51) Int. Cl.: H01M 10/0562, H01M 2/02

(54) **SHEATHING MATERIAL FOR ALL SOLID STATE BATTERY, ALL SOLID STATE BATTERY, AND METHOD FOR MANUFACTURING SAME**

(30) Priority: 12.03.2019 JP 2019044533
(71) Applicant: Dai Nippon Printing Co., Ltd., Shinjuku-ku, Tokyo 162-8001 (JP)
(72) Inventor: SASAKI, Miho, Tokyo 162-8001 (JP); TAKAHAGI, Atsuko, Tokyo 162-8001 (JP)
(74) Representative: Müller-Boré & Partner Patentanwälte PartG mbB
(86) International application number: PCT/JP2020/010969
(87) International publication number: WO 2020/184692

(57) **Abstract**

A sheathing material for an all solid state battery, the sheathing material comprising at least: a stack including a substrate layer, a barrier layer, and a heat fusible resin layer in this order; and an insulating layer provided on the heat fusible resin layer on the opposite side from the substrate layer side, wherein when an all solid state battery obtained by accommodating, in a packaged formed from the sheathing material for an all solid state battery, a battery element which includes at least a unit cell including a positive electrode active material layer, a negative electrode active material layer, and a solid state electrolyte layer stacked between the positive and negative electrode active material layers is seen in plan view, the insulating layer is disposed at a position covering the entire surface of the positive electrode active material layer in the all solid state battery.

## Description

### TECHNICAL FIELD

The present disclosure relates to an exterior material for an all-solid-state battery, an all-solid-state battery, and a method for producing the all-solid-state battery.

### BACKGROUND ART

An all-solid-state battery having a solid electrolyte as an electrolyte is known. The all-solid-state battery has the advantages of high safety and a wide operating temperature range because an organic solvent is not used in the battery.

On the other hand, it is known that the all-solid-state battery is likely to be delaminated between a solid electrolyte and a negative active material layer or a positive active material layer by expansion/shrinkage of a negative electrode or a positive electrode due to charge-discharge, so that deterioration of the battery is likely to proceed.

As a method for suppressing delamination between a solid electrolyte and a negative active material layer or a positive active material layer, a technique is known in which an all-solid-state battery is constrained in a state of being pressed at a high pressure. For example, Patent Document 1 discloses a method for producing a battery, including a lamination step of preparing a laminate including a positive electrode current collector, a positive electrode layer, an electrolyte layer, a negative electrode layer and a negative electrode current collector in this order, a pressurization step of pressurizing the laminate prepared in the laminating step in a laminating direction, and a constraining step of constraining the laminate while pressurizing the laminate in the laminating direction at a pressure of 0.1 MPa or more and 100 MPa or less for a predetermined time after the pressurization step.

### PRIOR ART DOCUMENT

### PATENT DOCUMENT

Patent Document 1: Japanese Patent Laid-open Publication No. 2012-142228

### SUMMARY OF THE INVENTION

### PROBLEMS TO BE SOLVED BY THE INVENTION

For suppressing delamination between a solid electrolyte and a negative active material layer or a positive active material layer in a use environment of the all-solid-state battery, it is desirable to continuously constrain the solid electrolyte, the negative active material layer and the positive active material layer by high-pressure-pressing of the all-solid-state battery from the outside of an exterior material.

On the other hand, in recent years, all-solid-state batteries have been required to be diversified in shape and to be thinned and lightened with improvement of performance of electric cars, hybrid electric cars, personal computers, cameras, mobile phones, and so on. However, metallic exterior materials that have often been heretofore used for batteries have the disadvantage that it is difficult to keep up with diversification in shape, and there is a limit on weight reduction. Thus, there has been proposed a film-shaped exterior material with a base material, a metal foil layer and a heat-sealable resin layer laminated in this order has been proposed as an exterior material that is easily processed into diversified shapes and is capable of achieving thickness reduction and weight reduction.

In such a film-shaped exterior material, generally, a space for storing battery elements is provided by molding into a bag shape or molding using a mold, and battery elements such as an electrode and a solid electrolyte are disposed in the space, and the heat-sealable resin layers are heat-sealed to each other to obtain an all-solid-state battery in which battery elements are stored inside the exterior material.

By applying such a film-shaped exterior material to an exterior material of an all-solid-state battery, weight reduction of electric vehicles, hybrid electric vehicles and the like are expected.

As described above, it is desirable that the all-solid-state battery be continuously constrained by high-pressure pressing from the outside of the exterior material even during use for suppressing delamination between the solid electrolyte and the negative active material layer or the positive active material layer. However, when the solid electrolyte and the negative active material layer or the positive active material layer are continuously constrained in a high-pressure state from the outside of the exterior material of the all-solid-state battery, there is a possibility that the exterior material is strongly pressed against the battery element, so that the thickness of the exterior material decreases, leading to occurrence of a short-circuit between the barrier layer laminated on the exterior material and the negative electrode or the positive electrode. In particular, the inventors of the present disclosure have found that when the solid electrolyte and the positive active material layer are subjected to high-temperature and high-pressure pressing and continuously constrained in a high-pressure state from the outside of the exterior material of the all-solid-state battery, there is a high possibility that the heat-sealable resin layer is strongly pressed against the battery element, so that the thickness of the heat-sealable resin layer (inner layer) decreases, leading to occurrence of a short-circuit between the barrier layer laminated on the exterior material and the positive electrode.

Under these circumstances, a main object of the present disclosure is to provide an exterior material for an all-solid-state battery which is capable of effectively suppressing a short-circuit of an all-solid-state battery.

### MEANS FOR SOLVING THE PROBLEM

The inventors of the present disclosure have extensively conducted studies for achieving the above-described object. As a result, it has been found that in an exterior material for an all-solid-state battery which includes a laminate including at least a base material layer, a barrier layer, and a heat-sealable resin layer in this order, the exterior material having an insulating layer provided on the heat-sealable resin layer on a side opposite to the base material layer side (i.e. battery element side), the insulating layer being provided so as to cover the entire surface of a positive active material layer of the all-solid-state battery in plan view of the all-solid-state battery, a short circuit of the all-solid-state battery is effectively suppressed even when the all-solid-state battery is subjected to high-temperature and high-pressure pressing from the outside of the exterior material, and the solid electrolyte, a negative active material layer and the positive active material layer are continuously constrained at a high pressure.

The present disclosure has been completed by further conducting studies based on the above-mentioned findings. That is, the present disclosure provides an invention of an aspect as described below:

An exterior material for an all-solid-state battery, the exterior material including: a laminate including at least a base material layer, a barrier layer, and a heat-sealable resin layer in this order; and an insulating layer provided on the heat-sealable resin layer on a side opposite to the base material layer side, in which in plan view of an all-solid-state battery having a battery element stored in a packaging formed from the exterior material for an all-solid-state battery, the battery element including at least a unit cell including a positive active material layer, a negative active material layer, and a solid electrolyte layer laminated between the positive active material layer and the negative active material layer, the insulating layer is located so as to cover the entire surface of the positive active material layer in the all-solid-state battery.

### ADVANTAGES OF THE INVENTION

According to the present disclosure, it is possible to provide an exterior material for an all-solid-state battery which is capable of effectively suppressing a short circuit of an all-solid-state battery. According to the present disclosure, it is also possible to provide an all-solid-state battery and a method for producing the all-solid-state battery.

### BRIEF DESCRIPTION OF THE DRAWINGS

Fig. 1 is a schematic diagram showing an example of a cross-sectional structure of an all-solid-state battery to which an exterior material for an all-solid-state battery according to the present disclosure is applied.
Fig. 2 is a schematic diagram showing an example of a cross-sectional structure of an all-solid-state battery to which an exterior material for an all-solid-state battery according to the present disclosure is applied.
Fig. 3 is a schematic diagram showing an example of a cross-sectional structure of an all-solid-state battery to which an exterior material for an all-solid-state battery according to the present disclosure is applied.
Fig. 4 is a schematic diagram showing an example of a cross-sectional structure of an all-solid-state battery to which an exterior material for an all-solid-state battery according to the present disclosure is applied.
Fig. 5 is a schematic plan view of an example of an all-solid-state battery to which an exterior material for an all-solid-state battery according to the present disclosure is applied.
Fig. 6 is a schematic cross-sectional view showing an example of a laminated structure of an exterior material for an all-solid-state battery according to the present disclosure.
Fig. 7 is a schematic cross-sectional view showing an example of a laminated structure of an exterior material for an all-solid-state battery according to the present disclosure.
Fig. 8 is a schematic cross-sectional view showing an example of a laminated structure of an exterior material for an all-solid-state battery according to the present disclosure.
Fig. 9 is a schematic cross-sectional view showing an example of a laminated structure of an exterior material for an all-solid-state battery according to the present disclosure.

### EMBODIMENTS OF THE INVENTION

An exterior material for an all-solid-state battery according to the present disclosure includes a laminate including at least a base material layer, a barrier layer, and a heat-sealable resin layer in this order; and an insulating layer provided on the heat-sealable resin layer on a side opposite to the base material layer side, and in plan view of an all-solid-state battery having a battery element stored in a packaging formed from the exterior material for an all-solid-state battery, the battery element including at least a unit cell including a positive active material layer, a negative active material layer, and a solid electrolyte layer laminated between the positive active material layer and the negative active material layer, the insulating layer is located so as to cover the entire surface of the positive active material layer in the all-solid-state battery. The exterior material for an all-solid-state battery according to the present disclosure is capable of effectively suppressing a short circuit of the all-solid-state battery because it has the above-mentioned configuration. More specifically, a short circuit of an all-solid-state battery can be effectively suppressed even when the all-solid-state battery is used while being constrained at a high pressure.

Hereinafter, the exterior material for an all-solid-state battery according to the present disclosure will be described in detail. In the present description, a numerical range indicated by the term "A to B" means "A or more" and "B or less". For example, the expression of "2 to 15 mm" means 2 mm or more and 15 mm or less.

### 1. Laminated structure of exterior material for all-solid-state battery

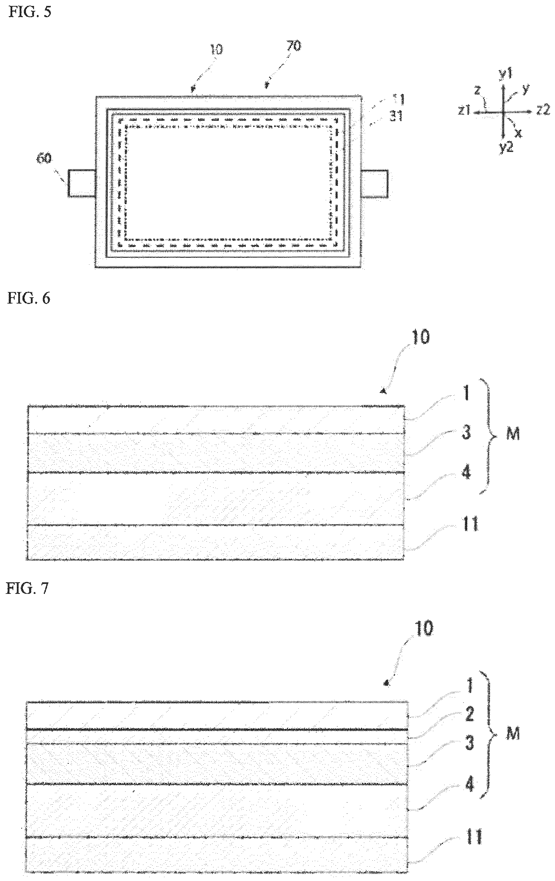

As shown in, for example, Figs. 6 to 9, an exterior material 10 for an all-solid-state battery according to the present disclosure includes a laminate M including at least a base material layer 1, a barrier layer 3 and a heat-sealable resin layer 4 in this order, and an insulating layer 11 provided on the heat-sealable resin layer 4 on a side opposite to the base material layer 1 side. In the exterior material 10 for an all-solid-state battery, the base material layer 1 is on the outer layer side, and the insulating layer 11 is on the inner layer side. In construction of the all-solid-state battery using the exterior material 10 for an all-solid-state battery and the battery element, the battery element is stored in a space formed by heat-sealing the peripheral edge portions of the heat-sealable resin layers 4 of the exterior material 10 for an all-solid-state battery which face each other. In the exterior material 10 for an all-solid-state battery, the insulating layer 11 is provided on the heat-sealable resin layer 4 on a side opposite to the base material layer 1 side (i.e. battery element side). It is to be noted that at least, the insulating layer 11 is not provided at a position where the heat-sealable resin layers 4 are heat-sealed to each other.

In the exterior material 10 for an all-solid-state battery according to the present disclosure, the insulating layer 11 may be laminated on the heat-sealable resin layer 4 before the exterior material is applied to an all-solid-state battery. When the exterior material 10 for an all-solid-state battery according to the present disclosure is applied to an all-solid-state battery, the insulating layer 11 may be disposed between the heat-sealable resin layer 4 of the laminate M and the battery element to obtain the exterior material 10 for an all-solid-state battery according to the present disclosure.

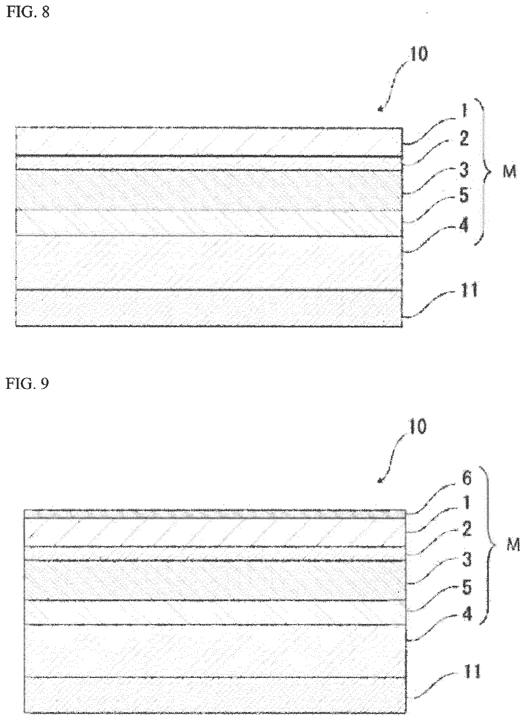

As shown in, for example, Figs. 7 to 9, the exterior material 10 for an all-solid-state battery may have an adhesive agent layer 2 between the base material layer 1 and the barrier layer 3 if necessary for the purpose of, for example, improving bondability between these layers. As shown in, for example, Figs. 8 and 9, an adhesive layer 5 may be present between the barrier layer 3 and the heat-sealable resin layer 4 if necessary for the purpose of, for example, improving bondability between these layers. As shown in Fig. 9, a surface coating layer 6 or the like may be provided on the outside of the base material layer 1 (on a side opposite to the heat-sealable resin layer 4 side) if necessary.

The total thickness of the laminate M and the insulating layer 11 forming the exterior material 10 for an all-solid-state battery is not particularly limited, and is preferably about 10,000 µm or less, about 8,000 µm or less or about 5,000 µm or less from the viewpoint of cost reduction, improvement of the energy density and the like, and preferably about 100 µm or more, about 150 µm or more, or about 200 µm or more from the viewpoint of maintaining the function of the exterior material 10 for an all-solid-state battery, which is protection of battery elements. The total thickness is preferably in the range of, for example, about 100 to 10,000 µm, about 100 to 8,000 µm, about 100 to 5,000 µm, about 150 to 10,000 µm, about 150 to 8,000 µm, about 150 to 5,000 µm, about 200 to 10,000 µm, 200 to 8,000 µm or about 200 to 5,000 µm, especially preferably about 100 to 500 µm.

Details of the layers forming the exterior material 10 for an all-solid-state battery will be described in the section "3. Layers Forming Exterior Material for All-Solid-State Battery".

### 2. All-solid-state battery

The all-solid-state battery to which the exterior material 10 for an all-solid-state battery according to the present disclosure (hereinafter, sometimes referred to as an "exterior material 10") is applied is not particularly limited except that the exterior material 10 (including the laminate M and the insulating layer 11) is used. That is, battery elements (electrodes, a solid electrolyte, a terminal and the like), other than the exterior material 10 (including the laminate M and the insulating layer 11), etc. are not particularly limited as long as they are applied to all-solid-state batteries, and the battery elements may be those that are used in known all-solid-state batteries. Hereinafter, an aspect in which the exterior material 10 for an all-solid-state battery according to the present disclosure is applied to an all-solid-state battery will be described in detail by taking the all-solid-state battery 70 of the present disclosure as an example.

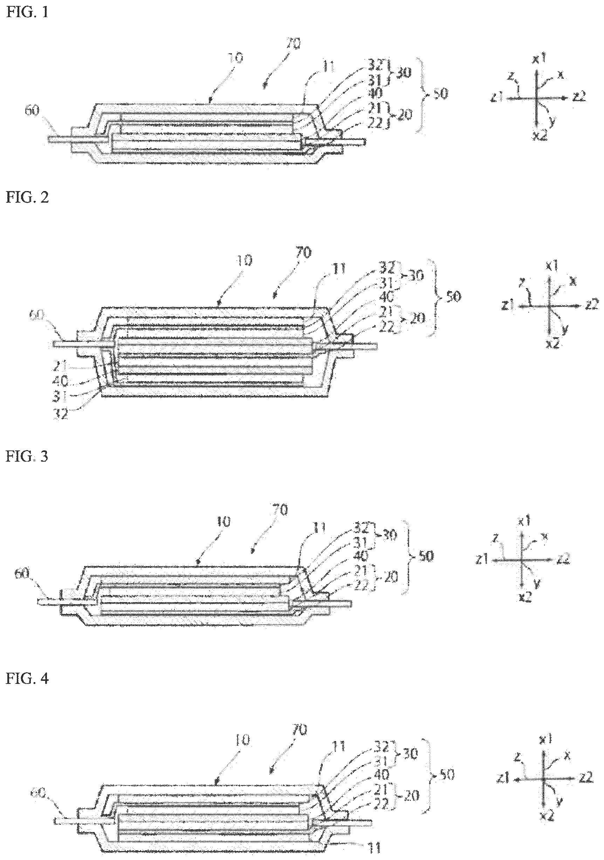

As shown in the schematic diagrams of Figs. 1 to 4, the all-solid-state battery 70 of the present disclosure is one in which a battery element including at least a unit cell 50 including a negative active material layer 21, a positive active material layer 31, and a solid electrolyte layer 40 laminated between the negative active material layer 21 and the positive active material layer 31 is stored in a packaging formed from the exterior material 10 for an all-solid-state battery according to present disclosure. More specifically, the negative active material layer 21 is laminated on the negative electrode current collector 22 to form the negative electrode layer 20, and the positive active material layer 31 is laminated on the positive electrode current collector 32 to form the positive electrode layer 30. The negative electrode current collector 22 and the positive electrode current collector 32 are each bonded to a terminal 60 exposed to the outside and electrically connected to the external environment. The solid electrolyte layer 40 is laminated between the negative electrode layer 20 and the positive electrode layer 30, and the negative electrode layer 20, the positive electrode layer 30 and the solid electrolyte layer 40 form the unit cell 50. The battery element of the all-solid-state battery 70 may include only one unit cell 50 or may include a plurality of unit cells 50. Figs. 1, 3 and 4 show an all-solid-state battery 50 including one unit cell 50 as a battery element, and Fig. 2 shows an all-solid-state battery 50 in which two unit cells 50 are laminated to form a battery element.

In the all-solid-state battery 70, the battery element is covered such that a flange portion (region where heat-sealable resin layers are in contact with each other) can be formed on the periphery edge of the battery element while the terminal 60 connected to each of the negative electrode layer 20 and the positive electrode layer 30 protrudes to the outside, and the heat-sealable resin layers at the flange portion are heat-sealed to each other, thereby providing an all-solid-state battery including an exterior material for an all-solid-state battery. When the battery element is stored in the packaging formed from the exterior material for an all-solid-state battery according to the present disclosure, the packaging is formed in such a manner that the heat-sealable resin portion of the exterior material for an all-solid-state battery according to the present disclosure is on the inner side (a surface contacting the battery element).

As shown in the schematic diagrams of Figs. 1 to 5, the insulating layer 11 of the exterior material 10 is disposed inside the laminate M forming the exterior material 10 in the all-solid-state battery 70 of the present disclosure, and the insulating layer 11 is provided so as to cover the entire surface of the positive active material layer of the all-solid-state battery in plan view of the all-solid-state battery 70. Since the entire portion at which the positive active material layer 31 is located is covered with the insulating layer 11, a short circuit of the all-solid-state battery can be effectively suppressed.

More specifically, as described above, it has been heretofore desirable that the all-solid-state battery be continuously constrained at a high pressure from the outside of the exterior material for suppressing delamination between the solid electrolyte and the negative active material layer or the positive active material layer. In particular, for suppressing delamination between the solid electrolyte and the negative active material layer or the positive active material layer, the all-solid-state battery is constrained at a high pressure by applying high pressure so as to cover the whole or a part of the negative active material layer of the all-solid-state battery in plan view of the all-solid-state battery 70. However, when the all-solid-state battery is subjected to high-temperature and high-pressure pressing from the outside of the exterior material, and the solid electrolyte and the positive and negative active material layers are further constrained at a high pressure, the thickness of the heat-sealable resin layer (inner layer) of the exterior material may decrease, leading to occurrence of a short circuit between the barrier layer (metal) laminated on the exterior material and the positive electrode or the negative electrode. In the exterior material 10 for an all-solid-state battery according to the present disclosure, the insulating layer 11 is provided so as to cover the entire surface of the positive active material layer of the all-solid-state battery in plan view of the all-solid-state battery 70. Thus, at a position where a high pressure is applied to the all-solid-state battery, the insulating layer 11 between the heat-sealable resin layer 4 and the positive active material layer 31 functions as a cushion to suppress a decrease in thickness of the heat-sealable resin layer 4 of the exterior material 10, so that occurrence of a short circuit between the barrier layer 3 laminated on the exterior material 10 and the positive electrode is effectively suppressed. As a result, the exterior material 10 of the present disclosure can effectively suppress a short circuit of the all-solid-state battery.

The insulating layer 11 of the exterior material 10 may cover the entire surface of the positive active material layer in plan view of the all-solid-state battery, and in plan view of the all-solid-state battery, the area of the insulating layer 11 may be the same as the area of the positive active material layer 31, or may be larger than the area of the positive active material layer 31 as shown in the schematic diagrams of Figs. 3 to 5. In plan view of the all-solid-state battery, the area of the insulating layer 11 may be the same as the area of the negative active material layer 21, or may be larger than the area of the negative active material layer 21. In general, in the all-solid-state battery, the area of the positive active material layer 31 is the same as the area of the negative active material layer 21 or smaller than the area of the negative active material layer 21 in plan view of the all-solid-state battery. In addition, a portion where the all-solid-state battery is pressed at a high pressure generally corresponds to a portion where the positive active material layer is present.

The insulating layer 11 may be provided on one surface side of the battery element, and it is preferable that the insulating layer 11 is provided on both surface sides of the battery element from the viewpoint of more effectively suppressing a short circuit of the all-solid-state battery. In Figs. 1 to 3, the insulating layer 11 is provided only on one surface side of the battery element, and in Fig. 4, the insulating layer 11 is provided on both surface sides of the battery element. The insulating layer 11 may cover at least a part of the lateral surface of the battery element which is not connected to the terminal. In this case, the insulating layer 11 located on the lateral surface of the battery element may be provided with a joint for avoiding impacts of high-pressure pressing.

As described above, the all-solid-state battery to which the exterior material 10 of the present disclosure is applied is not particularly limited as long as a specific exterior material 10 is used, and the same applies to the all-solid-state battery 70 of the present disclosure. Hereinafter, materials and the like of members forming the battery element of the all-solid-state battery to which the exterior material 10 of the present disclosure is applied will be exemplified.

In the battery element of the all-solid-state battery 70, at least the negative electrode layer 20, the positive electrode layer 30 and the solid electrolyte layer 40 form the unit cell 50 as described above. The negative electrode layer 20 has a structure in which the negative active material layer 21 is laminated on the negative electrode current collector 22. The positive electrode layer 30 has a structure in which the positive active material layer 31 is laminated on the positive electrode current collector 32. The negative electrode current collector 22 and the positive electrode current collector 32 are each bonded to a terminal 60 exposed to the outside and electrically connected to the external environment.

### [Positive active material layer 31]

The positive active material layer 31 is a layer containing at least a positive active material. If necessary, the positive active material layer 31 may further contain a solid electrolyte material, a conductive material, a binding material and the like in addition to the positive active material.

The positive active material is not particularly limited, and examples thereof include oxide active materials and sulfide active materials. When the all-solid-state battery is an all-solid-state lithium battery, examples of the oxide active material used as the positive active material include rock salt layered active materials such as LiCoO₂, LiMnO₂, LiNiO₂, LiVO₂ and LiNi_{1/3}Co_{1/3}Mn_{1/3}O₂, spinel type active materials such as LiMn₂O₄ and Li(Ni_{0.5}Mn_{1.5})O₄, olivine type active materials such as LiFePO₄ and LiMnPO₄, and Si-containing active materials such as Li₂FeSiO₄ and Li₂MnSiO₄. In addition, examples of the sulfide active material used as the positive active material of the all-solid-state lithium battery include copper shredder, iron sulfide, cobalt sulfide and nickel sulfide.

The shape of the positive active material is not particularly limited, and examples thereof include a particle shape. Preferably, the mean particle size (D₅₀) of the positive active material is, for example, about 0.1 to 50 µm. The content of the positive active material in the positive active material layer 31 is preferably about 10 to 99 mass%, more preferably about 20 to 90 mass%.

Preferably, the positive active material layer 31 further contains a solid electrolyte material. This enables improvement of ion conductivity in the positive active material layer 31. The solid electrolyte material contained in the positive active material layer 31 is the same as the solid electrolyte material exemplified for the solid electrolyte layer 40 described later. The content of the solid electrolyte material in the positive active material layer is preferably about 1 to 90 mass%, more preferably about 10 to 80 mass%.

The positive active material layer 31 may further contain a conductive material. Addition of a conductive material enables improvement of the electron conductivity of the positive active material layer. Examples of the conductive material include acetylene black, Ketjen black and carbon fiber. The positive active material layer may further contain a binding material. Examples of the binding material include fluorine-containing binding materials such as polytetrafluoroethylene (PTFE) and polyvinylidene fluoride (PVDF).

The thickness of the positive active material layer 31 is appropriately set according to the size and the like of the all-solid-state battery, and is preferably about 0.1 to 1,000 µm.

### [Positive electrode current collector 32]

Examples of the material forming the positive electrode current collector 32 include stainless steel (SUS), aluminum, nickel, iron, titanium and carbon.

The thickness of the positive electrode current collector 32 is appropriately set according to the size and the like of the all-solid-state battery, and is preferably about 10 to 1,000 µm.

### [Negative active material layer 21]

The negative active material layer 21 is a layer containing at least a negative active material. If necessary, the negative active material layer 21 may contain a solid electrolyte material, a conductive material, a binding material and the like in addition to the negative active material.

The negative active material is not particularly limited, and examples thereof include carbon active materials, metal active materials and oxide active materials. Examples of the carbon active material include graphite such as mesocarbon microbeads (MCMB) and highly oriented graphite (HOPG), and amorphous carbon such as hard carbon and soft carbon. Examples of the metal active material include In, Al, Si, and Sn. Examples of the oxide active material include Nb₂O₅, Li₄Ti₅O₁₂ and SiO.

The shape of the negative active material is not particularly limited, and examples thereof include a particle shape and a film shape. The mean particle size (D₅₀) of the negative active material is preferably about 0.1 to 50 µm. The content of the negative active material in the negative active material layer 21 is, for example, about 10 to 99 mass%, more preferably about 20 to 90 mass%.

Preferably, the negative active material layer 21 further contains a solid electrolyte material. This enables improvement of ion conductivity in the negative active material layer 21. The solid electrolyte material contained in the negative active material layer 21 is the same as the solid electrolyte material exemplified for the solid electrolyte layer 40 described later. The content of the solid electrolyte material in the negative active material layer 21 is preferably about 1 to 90 mass%, more preferably about 10 to 80 mass%.

The negative active material layer 21 may further contain a conductive material. The negative active material layer 21 may further contain a binding material. The conductive material and the binding material are the same as those exemplified for the positive active material layer 31 described above.

The thickness of the negative active material layer 21 is appropriately set according to the size and the like of the all-solid-state battery, and is preferably about 0.1 to 1,000 µm.

### [Negative electrode current collector 22]

Examples of the material forming the negative electrode current collector 22 include stainless steel (SUS), copper, nickel, and carbon.

The thickness of the negative electrode current collector 22 is appropriately set according to the size and the like of the all-solid-state battery, and is preferably about 10 to 1,000 µm.

### [Solid electrolyte layer 40]

The solid electrolyte layer 40 is a layer containing a solid electrolyte material. Examples of the solid electrolyte material include sulfide solid electrolyte materials and oxide solid electrolyte materials.

Sulfide solid electrolyte materials are preferable because many of the sulfide solid electrolyte materials have higher ion conductivity over oxide solid electrolyte materials, and oxide solid electrolyte materials are preferable because they have higher chemical stability over sulfide solid electrolyte materials.

Specific examples of the oxide solid electrolyte material include compounds having a NASICON-type structure. Examples of the compound having a NASICON-type structure include a compound represented by the general formula Li₁₊ₓAlₓGe₂₋ₓ(PO₄)₃ (0 ≤ x ≤ 2). In particular, the compound is preferably Li_{1.5}Al_{0.5}Ge_{1.5}(PO₄)₃. Examples of the compound having a NASICON-type structure include a compound represented by the general formula Li₁₊ₓAlxTi₂₋ₓ(PO₄)₃ (0 ≤ x ≤ 2). In particular, the compound is preferably Li_{1.5}Al_{0.5}Ti_{1.5}(PO₄)₃. Examples of the oxide solid electrolyte material used for the all-solid lithium secondary battery include LiLaTiO (e.g. Li_{0.34}La_{0.51}TiO₃) and LiPON (e.g. Li_{2.9}PO_{3.3}N_{0.46}) and LiLaZrO (e.g.Li₇La₃Zr₂O₁₂).

Specific examples of the sulfide solid electrolyte material include Li₂S-P₂S₅, Li₂S-P₂S₅-LiI, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂SP₂S₅-ZmSn (where each of m and n is a positive number, and Z is any of Ge, Zn, and Ga), Li₂S-GeS₂, Li₂S-SiS₂-Li₃PO₄, and Li₂S-SiS₂-LiₓMO_{y} (where each of x and y is a positive number, and M is any one of P, Si, Ge, B, Al, Ga, and In). Note that the above description of "Li₂S-P₂S₅" means a sulfide solid electrolyte material obtained using a raw material composition containing Li₂S and P₂S₅, and the same applies to other descriptions. The sulfide solid electrolyte material may be sulfide glass or crystallized sulfide glass.

The content of the solid electrolyte material in the solid electrolyte layer 40 is not particularly limited, and is preferably 60 mass% or more, more preferably 70 mass% or more, still more preferably 80 mass% or more. The solid electrolyte layer may contain a binding material or may include only a solid electrolyte material.

The thickness of the solid electrolyte layer 40 is appropriately set according to the size and the like of the all-solid-state battery, and is preferably about 0.1 to 1,000 µm, more preferably about 0.1 to 300 µm.

The all-solid-state battery 70 of the present disclosure can be suitably used in an environment of being constrained under high pressure from the outside. From the viewpoint of suitably suppressing delamination between the solid electrolyte and the negative active material layer (and between the solid electrolyte and the positive active material layer), the pressure for constraining the all-solid-state battery 70 from the outside is preferably about 0.1 MPa or more, more preferably 0.5 MPa or more, further more preferably about 1 MPa or more, still more preferably 5 MPa or more, and preferably about 100 MPa or less, more preferably about 70 MPa or less, still more preferably about 30 MPa or less, and the pressure is preferably in the range of about 0.1 to 100 MPa, about 0.1 to 70 MPa, about 0.1 to 30 MPa, about 0.5 to 100 MPa, about 0.5 to 70 MPa, about 0.5 to 30 MPa, about 1 to 100 MPa, about 1 to 70 MPa, about 1 to 30 MPa, about 5 to 100 MPa, about 5 to 70 MPa, about 10 to 100 MPa or about 1 to 30 MPa.

Examples of the method for constraining the solid-state battery 70 under high pressure from the outside include a method in which the all-solid-state battery is sandwiched between metal plates or the like, and fixed in a state of being pressed at high pressure (e.g. tightened with a vise or the like); and methods such as pressurization with gas.

From the same viewpoint, the temperature at which the all-solid-state battery 70 is constrained from the outside is preferably 20°C or higher, more preferably 40°C or higher, and preferably 200°C or lower, more preferably 150°C or lower, and is preferably in the range of about 20 to 150°C or about 40 to 150°C.

### 3. Layers forming exterior material for all-solid-state battery

The exterior material 10 of the present disclosure includes a laminate M including at least the base material layer 1, the barrier layer 3 and the heat-sealable resin layer 4 in this order, and the insulating layer 11. The insulating layer 11 is provided on the heat-sealable resin layer 4 on a side opposite to the base material layer 1. Hereinafter, the layers forming the laminate M of the exterior material 10 of the present disclosure and the insulating layer 11 will be described in detail.

### [Insulating layer 11]

In the present disclosure, the insulating layer 11 is a layer that is provided so as to cover the entire surface of the positive active material layer 31 of the all-solid-state battery in plan view of the all-solid-state battery for effectively suppressing a short circuit of the all-solid-state battery, and is formed from an insulating member. As described above, the all-solid-state battery 70 is one in which the battery element is stored in a packaging formed from the exterior material 10 for an all-solid-state battery. The battery element includes at least a unit cell 50. Further, the unit cell 50 includes the positive active material layer 31, the negative active material layer 21, and the solid electrolyte layer 40 laminated between the positive active material layer 31 and the negative active material layer 21.

In the exterior material 10 of the present disclosure, the insulating layer 11 is located so as to cover the entire surface of the positive active material layer 31 of the all-solid-state battery 70. In plan view of the all-solid-state battery 70, the area of the insulating layer 11 may be the same as the area of the positive active material layer 31, or may be larger than the area of the positive active material layer 31 as shown in the schematic diagrams of Figs. 3 to 5. In a plan view of the all-solid-state battery 70, the area of the insulating layer 11 may be the same as the area of the negative active material layer 21, or may be larger than the area of the negative active material layer 21. In plan view of the all-solid-state battery 70, the area of the insulating layer 11 is preferably 1.0 to 1.5 times, more preferably 1.0 to 1.2 times the area of the positive active material layer 31.

In the exterior material 10, the method for disposing the insulating layer 11 is not particularly limited as long as the insulating layer 11 is located so as to cover the entire surface of the positive active material layer 31 of the all-solid-state battery 70. For example, when in a process for producing the all-solid-state battery, the exterior material 10 before the insulating layer 11 is provided is cold-molded to form a storage portion (a concave portion having a shape protruding from the heat-sealable resin layer side to the base material layer side) for storing the battery element, the insulating layer 11 sized to enter the storage portion is then placed in the storage portion, and the battery element is disposed thereon, it is easy to determine a position at which the insulating layer 11 is disposed on the exterior material 10.

The insulating layer 11 may be provided on one surface side of the battery element, and it is preferable that the insulating layer 11 is located on both surface sides of the battery element from the viewpoint of more effectively suppressing a short circuit of the all-solid-state battery. That is, the insulating layer 11 may be disposed on at least one of both surface sides where the all-solid-state battery 70 is pressed at a high pressure from the outside, and it is more preferable that the insulating layer is disposed on both surface sides. As described above, in Figs. 1 to 3, the insulating layer 11 is provided only on one surface side of the battery element, and in Fig. 4, the insulating layer 11 is provided on both surface sides of the battery element.

The material forming the insulating layer 11 (material forming the insulating member) is not particularly limited as long as it has insulation quality, and can function as a cushion against high-pressure pressing, and a resin film is preferable.

The resin that forms the resin film is not particularly limited, and examples thereof include polyester, polyamide, polyolefin, polyphenylene sulfide, polyether ether ketone, epoxy resin, acrylic resin, fluororesin, silicone resin, and phenol resin. Among them, polyester and the like are preferable because they have high mechanical strength and excellent insulation quality. Examples of the polyester are the same as those exemplified in the section [Base material layer 1] described later.

From the viewpoint of effectively suppressing a short circuit of the all-solid-state battery, the piercing strength of the insulating layer 11 is preferably 3 N or more, more preferably about 4 N or more, still more preferably about 5 N or more, even more preferably 8 N or more, and preferably about 50 N or less, more preferably about 40 N or less, and is preferably in the range of about 3 to 50 N, about 3 to 40 N, about 4 to 50 N, about 4 to 40 N, about 5 to 50 N, about 5 to 40 N, about 8 to 50 N or about 8 to 40 N. In the present disclosure, the piercing strength of the insulating layer 11 is specifically a value measured by the following method.

### <Piercing strength>

The piercing strength of the insulating layer 11 is measured by a method conforming to JIS Z 1707: 1997. Specifically, in a measurement environment at 23 ± 2°C and a relative humidity of 50 ± 5%, a test piece is fixed with a table having a diameter of 115 mm and having an opening with a diameter of 15 mm at the center, and a pressing plate, and pierced at a speed of 50 ± 5 mm per minute with a semicircular needle having a diameter of 1.0 mm and a tip shape radius of 0.5 mm, and the maximum stress before the needle completely passes through the test piece is measured. The number of test pieces is 5, and an average for the test pieces is determined. In the case where there is a shortage of test pieces so that five test pieces cannot be measured, test pieces available for the measurement are measured, and an average value for the test pieces is determined.

From the viewpoint of effectively suppressing a short circuit of the all-solid-state battery, the melting point of the insulating layer 11 is preferably about 200°C or higher, more preferably about 220°C or higher, and preferably about 450°C or lower, more preferably about 400°C or lower, and is preferably in the range of about 200 to 450°C, about 220 to 450°C, about 200 to 400°C or about 220 to 400°C. In the present disclosure, the melting point of the insulating layer 11 is a value measured by differential scanning calorimetry (DSC).

Preferably, the insulating layer 11 is not bonded to the battery element. More specifically, it is preferable that the insulating layer 11 is not bonded to the battery element using an adhesive or the like. The insulating layer 11 is not required to be bonded to the heat-sealable resin layer 4 of the exterior material 10, or may be bonded to the heat-sealable resin layer 4 by an adhesive, heat-sealing, or the like. When the all-solid-state battery 70 is pressed at a high pressure from the outside, the insulating layer 11 is not bonded to the battery element, and therefore the insulating layer 11 can easily move at the interface with the battery element, so that it is possible to suppress application of a large external force to the battery element and the heat-sealable resin layer 4 in a direction perpendicular to a direction in which high-pressure pressing is performed.

The thickness of the insulating layer 11 is not particularly limited as long as the insulating layer 11 exhibits insulation quality and can function as a cushion against high-pressure pressing, and the thickness is preferably about 5 µm or more, more preferably about 10 µm or more, and preferably about 500 µm or less, more preferably about 200 µm or less, still more preferably about 100 µm or less, and is preferably in the range of about 5 to 500 µm, about 5 to 200 µm, about 5 to 100 µm, about 10 to 500 µm, about 10 to 200 µm or about 10 to 100 µm.

### [Base material layer 1]

In the present disclosure, the base material layer 1 is a layer provided on the laminate M for the purpose of, for example, exhibiting a function as a base material of the exterior material for an all-solid-state battery. The base material layer 1 is located on the outer layer side of the exterior material for an all-solid-state battery.

The material that forms the base material layer 1 is not particularly limited as long as it has a function as a base material, i.e. at least insulation quality. The base material layer 1 can be formed using, for example, a resin, and the resin may contain additives described later.

When the base material layer 1 is formed of a resin, the base material layer 1 may be, for example, a resin film formed of a resin, or may be formed by applying a resin. The resin film may be an unstretched film or a stretched film. Examples of the stretched film include uniaxially stretched films and biaxially stretched films, and biaxially stretched films are preferable. Examples of the stretching method for forming a biaxially stretched film include a sequential biaxial stretching method, an inflation method, and a simultaneous biaxial stretching method. Examples of the method for applying a resin include a roll coating method, a gravure coating method and an extrusion coating method.

Examples of the resin that forms the base material layer 1 include resins such as polyester, polyamide, polyolefin, epoxy resin, acrylic resin, fluororesin, polyurethane, silicone resin and phenol resin, and modified products of these resins. The resin that forms the base material layer 1 may be a copolymer of these resins or a modified product of the copolymer. Further, a mixture of these resins may be used.

Of these resins, polyester and polyamide are preferable as resins that form the base material layer 1.

Specific examples of the polyester resin include polyethylene terephthalate, polybutylene terephthalate, polyethylene naphthalate, polybutylene naphthalate, polyethylene isophthalate, and copolyesters. Examples of the copolyester include copolyesters having ethylene terephthalate as a main repeating unit. Specific examples thereof include copolymer polyesters that are polymerized with ethylene isophthalate and include ethylene terephthalate as a main repeating unit (hereinafter, abbreviated as follows after polyethylene(terephthalate/isophthalate)), polyethylene(terephthalate/adipate), polyethylene(terephthalate/sodium sulfoisophthalate), polyethylene(terephthalate/sodium isophthalate), polyethylene (terephthalate/phenyl-dicarboxylate) and polyethylene(terephthalate/decane dicarboxylate). These polyesters may be used alone, or may be used in combination of two or more thereof.

Specific examples of the polyamide include polyamides such as aliphatic polyamides such as nylon 6, nylon 66, nylon 610, nylon 12, nylon 46, and copolymers of nylon 6 and nylon 66; hexamethylenediamine-isophthalic acid-terephthalic acid copolymerization polyamides containing a structural unit derived from terephthalic acid and/or isophthalic acid, such as nylon 61, nylon 6T, nylon 6IT and nylon 6I6T (I denotes isophthalic acid and T denotes terephthalic acid), and polyamides containing aromatics, such as polyamide MXD6 (polymethaxylylene adipamide); cycloaliphatic polyamides such as polyamide PACM6 (polybis(4-aminocyclohexyl)methaneadipamide; polyamides copolymerized with a lactam component or an isocyanate component such as 4,4'-diphenylmethane-diisocyanate, and polyester amide copolymers and polyether ester amide copolymers as copolymers of a copolymerization polyamide and a polyester or a polyalkylene ether glycol; and copolymers thereof. These polyamides may be used alone, or may be used in combination of two or more thereof.

The base material layer 1 contains preferably at least one of a polyester film, a polyamide film and a polyolefm film, preferably at least one of a stretched polyester film, a stretched polyamide film and a stretched polyolefin film, still more preferably at least one of a stretched polyethylene terephthalate film, a stretched polybutylene terephthalate film, a stretched nylon film and a stretched polypropylene film, even more preferably at least one of a biaxially stretched polyethylene terephthalate film, a biaxially stretched polybutylene terephthalate film, a biaxially stretched nylon film, and a biaxially stretched polypropylene film.

The base material layer 1 may be a single layer, or may include two or more layers. When the base material layer 1 includes two or more layers, the base material layer 1 may be a laminate obtained by laminating resin films with an adhesive or the like, or a resin film laminate obtained by co-extruding resins to form two or more layers. The resin film laminate obtained by co-extruding resins to form two or more layers may be used as the base material layer 1 in an unstretched state, or may be uniaxially stretched or biaxially stretched and used as the base material layer 1. When the base material layer 1 is a single layer, it is preferable that the base material layer 1 is composed of a single layer of polyester resin.

Specific examples of the resin film laminate with two or more layers in the base material layer 1 include laminates of a polyester film and a nylon film, nylon film laminates with two or more layers, and polyester film laminates with two or more layers. Laminates of a stretched nylon film and a stretched polyester film, stretched nylon film laminates with two or more layers, and stretched polyester film laminates with two or more layers are preferable. For example, when the base material layer 1 is a resin film laminate with two layers, the base material layer 1 is preferably a laminate of a polyester resin film and a polyester resin film, a laminate of a polyamide resin film and a polyamide resin film, or a laminate of a polyester resin film and a polyamide resin film, more preferably a laminate of a polyethylene terephthalate film and a polyethylene terephthalate film, a laminate of a nylon film and a nylon film, or a laminate of a polyethylene terephthalate film and a nylon film.

When the base material layer 1 is a resin film laminate with two or more layers, the two or more resin films may be laminated with an adhesive interposed therebetween. Specific examples of the preferred adhesive include the same adhesives as those exemplified for the adhesive agent layer 2 described later. The method for laminating a resin film having two or more layers is not particularly limited, and a known method can be employed. Examples thereof include a dry lamination method, a sand lamination method, an extrusion lamination method and a thermal lamination method, and a dry lamination method is preferable. When the resin film is laminated by a dry lamination method, it is preferable to use a polyurethane adhesive as the adhesive. Here, the thickness of the adhesive is, for example, about 2 to 5 µm. In addition, the lamination may be performed with an anchor coat layer formed on the resin film. Examples of the anchor coat layer include the same adhesives as those exemplified for the adhesive agent layer 2 described later. Here, the thickness of the anchor coat layer is, for example, about 0.01 to 1.0 µm.

Additives such as a lubricant, a flame retardant, an antiblocking agent, an antioxidant, a light stabilizer, a tackifier and an antistatic agent may be present on at least one of the base material layer 1 and/or inside the base material layer 1. The additives may be used alone, or may be used in combination of two or more thereof.

In the present disclosure, it is preferable that a lubricant is present on the surface of the base material layer 1 from the viewpoint of enhancing the moldability of the exterior material for an all-solid-state battery. The lubricant is not particularly limited, and is preferably an amide-based lubricant. Specific examples of the amide-based lubricant include saturated fatty acid amides, unsaturated fatty acid amides, substituted amides, methylol amides, saturated fatty acid bisamides, unsaturated fatty acid bisamides, fatty acid ester amides, and aromatic bisamides. Specific examples of the saturated fatty acid amide include lauric acid amide, palmitic acid amide, stearic acid amide, behenic acid amide, and hydroxystearic acid amide. Specific examples of unsaturated fatty acid amide include oleic acid amide and erucic acid amide. Specific examples of the substituted amide include N-oleylpalmitic acid amide, N-stearyl stearic acid amide, N-stearyl oleic acid amide, N-oleyl stearic acid amide, and N-stearyl erucic acid amide. Specific examples of the methylolamide include methylolstearic acid amide. Specific examples of the saturated fatty acid bisamide include methylenebisstearic acid amide, ethylenebiscapric acid amide, ethylenebislauric acid amide, ethylenebisstearic acid amide, ethylenebishydroxystearic acid amide, ethylenebisbehenic acid amide, hexamethylenebisstearic acid amide, hexamethylenehydroxystearic acid amide, N,N'-distearyl adipic acid amide, and N,N'-distearyl sebacic acid amide. Specific examples of the unsaturated fatty acid bisamide include ethylenebisoleic acid amide, ethylenebiserucic acid amide, hexamethylenebisoleic acid amide, N,N'-dioleyladipic acid amide, and N,N'-dioleylsebacic acid amide. Specific examples of the fatty acid ester amide include stearoamideethyl stearate. Specific examples of the aromatic bisamide include m-xylylenebisstearic acid amide, m-xylylenebishydroxystearic acid amide, and N,N'-distearylisophthalic acid amide. The lubricants may be used alone, or may be used in combination of two or more thereof.

When the lubricant is present on the surface of the base material layer 1, the amount of the lubricant present is not particularly limited, and is preferably about 3 mg/m² or more, more preferably about 4 to 15 mg/m², still more preferably about 5 to 14 mg/m².

The lubricant present on the surface of the base material layer 1 may be one obtained by exuding the lubricant contained in the resin forming the base material layer 1, or one obtained by applying the lubricant to the surface of the base material layer 1.

The thickness of the base material layer 1 is not particularly limited as long as a function as a base material is performed, and the thickness of the base material layer 1 is, for example, about 3 to 50 µm, preferably about 10 to 35 µm. When the base material layer 1 is a resin film laminate with two or more layers, the thickness of the resin film forming each layer is preferably about 2 to 25 µm.

### [Adhesive agent layer 2]

In the exterior material for an all-solid-state battery according to the present disclosure, the adhesive agent layer 2 is a layer provided between the base material layer 1 and the barrier layer 3 if necessary for the purpose of enhancing bondability between these layers in the laminate M.

The adhesive agent layer 2 is formed from an adhesive capable of bonding the base material layer 1 and the barrier layer 3. The adhesive used for forming the adhesive agent layer 2 is not limited, and may be any of a chemical reaction type, a solvent volatilization type, a heat melting type, a heat pressing type, and the like. The adhesive agent may be a two-liquid curable adhesive (two-liquid adhesive), a one-liquid curable adhesive (one-liquid adhesive), or a resin that does not involve curing reaction. The adhesive agent layer 2 may be a single layer or a multi-layer.

Specific examples of the adhesive component contained in the adhesive include polyester resins such as polyethylene terephthalate, polybutylene terephthalate, polyethylene naphthalate, polybutylene naphthalate, polyethylene isophthalate and copolyester; polyether; polyurethane; epoxy resins; phenol resins; polyamides such as nylon 6, nylon 66, nylon 12 and copolymerized polyamide; polyolefin-based resins such as polyolefins, cyclic polyolefins, acid-modified polyolefins and acid-modified cyclic polyolefins; cellulose; (meth)acrylic resins; polyimide; polycarbonate; amino resins such as urea resins and melamine resins; rubbers such as chloroprene rubber, nitrile rubber and styrene-butadiene rubber; and silicone resins. These adhesive components may be used alone, or may be used in combination of two or more thereof. Of these adhesive components, polyurethane-based adhesives are preferable. In addition, the adhesive strength of these resins used as adhesive components can be increased by using an appropriate curing agent in combination. As the curing agent, appropriate one is selected from polyisocyanate, a polyfunctional epoxy resin, an oxazoline group-containing polymer, a polyamine resin, an acid anhydride and the like according to the functional group of the adhesive component.

Examples of the polyurethane adhesive include polyurethane adhesives containing a main agent containing a polyol compound and a curing agent containing an isocyanate compound. The polyurethane adhesive is preferably a two-liquid curable polyurethane adhesive having polyol such as polyester polyol, polyether polyol or acrylic polyol as a main agent, and aromatic or aliphatic polyisocyanate as a curing agent. Preferably, polyester polyol having a hydroxyl group in the side chain in addition to a hydroxyl group at the end of the repeating unit is used as the polyol compound.

Other components may be added to the adhesive agent layer 2 as long as bondability is not inhibited, and the adhesive agent layer 2 may contain a colorant, a thermoplastic elastomer, a tackifier, a filler, and the like. When the adhesive agent layer 2 contains a colorant, the exterior material for an all-solid-state battery can be colored. As the colorant, known colorants such as pigments and dyes can be used. The colorants may be used alone, or may be used in combination of two or more thereof.

The type of pigment is not particularly limited as long as the bondability of the adhesive agent layer 2 is not impaired. Examples of the organic pigment include azo-based pigments, phthalocyanine-based pigments, quinacridone-based pigments, anthraquinone-based pigments, dioxazine-based pigments, indigothioindigo-based pigments, perinone-perylene-based pigments, isoindolenine-based pigments and benzimidazolone-based pigments. Examples of the inorganic pigment include carbon black-based pigments, titanium oxide-based pigments, cadmium-based pigments, lead-based pigments, chromium-based pigments and iron-based pigments, and also fine powder of mica (mica) and fish scale foil.

Of the colorants, carbon black is preferable for the purpose of, for example, blackening the appearance of the exterior material for an all-solid-state battery.

The average particle diameter of the pigment is not particularly limited, and is, for example, about 0.05 to 5 µm, preferably about 0.08 to 2 µm. The average particle size of the pigment is a median diameter measured by a laser diffraction/scattering particle size distribution measuring apparatus.

The content of the pigment in the adhesive agent layer 2 is not particularly limited as long as the exterior material for an all-solid-state battery is colored, and the content is, for example, about 5 to 60 mass%, preferably 10 to 40 mass%.

The thickness of the adhesive agent layer 2 is not particularly limited as long as the base material layer 1 and the barrier layer 3 can be bonded to each other, and for example, the thickness is about 1 µm or more, or about 2 µm or more, and about 10 µm or less, or about 5 µm or less, and is preferably in the range of about 1 to 10 µm, about 1 to 5 µm, about 2 to 10 µm, or about 2 to 5 µm.

### [Colored Layer]

The colored layer is a layer provided between the base material layer 1 and the barrier layer 3 if necessary (not shown). When the adhesive agent layer 2 is present, the colored layer may be provided between the base material layer 1 and the adhesive agent layer 2 or between the adhesive agent layer 2 and the barrier layer 3. The colored layer may be provided on the outside of the base material layer 1. By providing the colored layer, the exterior material for an all-solid-state battery can be colored.

The colored layer can be formed by, for example, applying an ink containing a colorant to the surface of the base material layer 1, the surface of the adhesive agent layer 2, or the surface of the barrier layer 3. As the colorant, known colorants such as pigments and dyes can be used. The colorants may be used alone, or may be used in combination of two or more thereof.

Specific examples of the colorant contained in the colored layer include the same colorants as those exemplified in the section [Adhesive agent Layer 2].

### [Barrier layer 3]

In the exterior material for an all-solid-state battery, the barrier layer 3 in the laminate M is a layer which suppresses at least ingress of moisture.

Examples of the barrier layer 3 include metal foils, deposited films and resin layers having a barrier property. Examples of the deposited film include metal deposited films, inorganic oxide deposited films and carbon-containing inorganic oxide deposited films, and examples of the resin layer include those of polyvinylidene chloride, fluorine-containing resins such as polymers containing chlorotrifluoroethylene (CTFE) as a main component, polymers containing tetrafluoroethylene (TFE) as a main component, polymers having a fluoroalkyl group, and polymers containing a fluoroalkyl unit as a main component, and ethylene vinyl alcohol copolymers. Examples of the barrier layer 3 include resin films provided with at least one of these deposited films and resin layers. A plurality of barrier layers 3 may be provided. Preferably, the barrier layer 3 contains a layer formed of a metal material. Specific examples of the metal material forming the barrier layer 3 include aluminum alloys, stainless steel, titanium steel and steel sheets. When the metal material is used as a metal foil, it is preferable that the metal material includes at least one of an aluminum alloy foil and a stainless steel foil.

The aluminum alloy is more preferably a soft aluminum alloy foil formed of, for example, an annealed aluminum alloy from the viewpoint of improving the moldability of the exterior material for an all-solid-state battery, and is preferably an aluminum alloy foil containing iron from the viewpoint of further improving the moldability. In the aluminum alloy foil containing iron (100 mass%), the content of iron is preferably 0.1 to 9.0 mass%, more preferably 0.5 to 2.0 mass%. When the content of iron is 0.1 mass% or more, it is possible to obtain an exterior material for an all-solid-state battery which has more excellent moldability. When the content of iron is 9.0 mass% or less, it is possible to obtain an exterior material for an all-solid-state battery which is more excellent in moldability. Examples of the soft aluminum alloy foil include aluminum alloy foils having a composition specified in JIS H4160: 1994 A8021H-O, JIS H4160: 1994 A8079H-O, JIS H4000: 2014 A8021P-O, or JIS H4000: 2014 A8079P-O. If necessary, silicon, magnesium, copper, manganese or the like may be added. Softening can be performed by annealing or the like.

Examples of the stainless steel foil include austenitic stainless steel foils, ferritic stainless steel foils, austenitic/ferritic stainless steel foils, martensitic stainless steel foils and precipitation-hardened stainless steel foils. From the viewpoint of providing an exterior material for an all-solid-state battery which is further excellent in moldability, it is preferable that the stainless steel foil is formed of austenitic stainless steel.

Specific examples of the austenite-based stainless steel foil include SUS 304 stainless steel, SUS 301 stainless steel and SUS 316L stainless steel, and of these, SUS 304 stainless steel is especially preferable.

When the barrier layer 3 is a metal foil, the barrier layer 3 may perform a function as a barrier layer suppressing at least ingress of moisture, and has a thickness of, for example, about 9 to 200 µm. For example, the thickness of the barrier layer 3 is preferably about 85 µm or less, more preferably about 50 µm or less, still more preferably about 40 µm or less, especially preferably about 35 µm or less, and preferably about 10 µm or more, more preferably about 20 µm or more, still more preferably about 25 µm or more. The thickness is preferably in the range of about 10 to 85 µm, about 10 to 50 µm, about 10 to 40 µm, about 10 to 35 µm, about 20 to 85 µm, about 20 to 50 µm, about 20 to 40 µm, about 20 to 35 µm, about 25 to 85 µm, about 25 to 50 µm, about 25 to 40 µm, or about 25 to 35 µm. When the barrier layer 3 is composed of an aluminum alloy foil, the thickness thereof is especially preferably in the above-described range, particularly 25 to 85 µm or about 25 to 50 µm are particularly preferable. Particularly, when the barrier layer 3 is formed of a stainless steel foil, the thickness of the stainless steel foil is preferably about 60 µm or less, more preferably about 50 µm or less, still more preferably about 40 µm or less, even more preferably about 30 µm or less, especially preferably about 25 µm or less, and preferably about 10 µm or more, more preferably about 15 µm or more. The thickness is about preferably in the range of about 10 to 60 µm, about 10 to 50 µm, about 10 to 40 µm, about 10 to 30 µm, about 10 to 25 µm, about 15 to 60 µm, about 15 to 50 µm, about 15 to 40 µm, about 15 to 30 µm, or about 15 to 25 µm.

When the barrier layer 3 is a metal foil, it is preferable that a corrosion-resistant film is provided at least on a surface on a side opposite to the base material layer for preventing dissolution and corrosion by corrosive gas generated from the solid electrolyte. The barrier layer 3 may include a corrosion-resistant film on each of both surfaces. Here, the corrosion-resistant film refers to a thin film obtained by subjecting the surface of the barrier layer to, for example, hydrothermal denaturation treatment such as boehmite treatment, chemical conversion treatment, anodization treatment, plating treatment with nickel, chromium or the like, or corrosion prevention treatment by applying a coating agent to impart corrosion resistance to the barrier layer. One of treatments for forming the corrosion-resistant film may be performed, or two or more thereof may be performed in combination. In addition, not only one layer but also multiple layers can be formed. Further, of these treatments, the hydrothermal denaturation treatment and the anodization treatment are treatments in which the surface of the metal foil is dissolved with a treatment agent to form a metal compound excellent in corrosion resistance. The definition of the chemical conversion treatment may include these treatments. When the barrier layer 3 is provided with the corrosion-resistant film, the barrier layer 3 is regarded as including the corrosion-resistant film.

The corrosion-resistant film exhibits the effects of preventing delamination between the barrier layer (e.g. an aluminum alloy foil) and the base material layer during molding of the exterior material for an all-solid-state battery; preventing dissolution and corrosion of the surface of the barrier layer by corrosive gas generated from the solid electrolyte, particularly dissolution and corrosion of aluminum oxide present on the surface of the barrier layer when the barrier layer is an aluminum alloy foil; improving the bondability (wettability) of the surface of the barrier layer; preventing delamination between the base material layer and the barrier layer during heat-sealing; and preventing delamination between the base material layer and the barrier layer during molding.

Various corrosion-resistant films formed by chemical conversion treatment are known, and examples thereof include mainly corrosion-resistant films containing at least one of a phosphate, a chromate, a fluoride, a triazine thiol compound, and a rare earth oxide. Examples of the chemical conversion treatment using a phosphate or a chromate include chromic acid chromate treatment, phosphoric acid chromate treatment, phosphoric acid-chromate treatment and chromate treatment, and examples of the chromium compound used in these treatments include chromium nitrate, chromium fluoride, chromium sulfate, chromium acetate, chromium oxalate, chromium biphosphate, acetylacetate chromate, chromium chloride and chromium potassium sulfate. Examples of the phosphorus compound used in these treatments include sodium phosphate, potassium phosphate, ammonium phosphate and polyphosphoric acid. Examples of the chromate treatment include etching chromate treatment, electrolytic chromate treatment and coating-type chromate treatment, and coating-type chromate treatment is preferable. This coating-type chromate treatment is treatment in which at least a surface of the barrier layer (e.g. an aluminum alloy foil) on the inner layer side is first degreased by a well-known treatment method such as an alkali immersion method, an electrolytic cleaning method, an acid cleaning method, an electrolytic acid cleaning method or an acid activation method, and a treatment solution containing a metal phosphate such as Cr (chromium) phosphate, Ti (titanium) phosphate, Zr (zirconium) phosphate or Zn (zinc) phosphate or a mixture of these metal salts as a main component, a treatment solution containing any of non-metal salts of phosphoric acid and a mixture of these non-metal salts as a main component, or a treatment solution formed of a mixture of any of these salts and a synthetic resin or the like is then applied to the degreased surface by a well-known coating method such as a roll coating method, a gravure printing method or an immersion method, and dried. As the treatment liquid, for example, various solvents such as water, an alcohol-based solvent, a hydrocarbon-based solvent, a ketone-based solvent, an ester-based solvent, and an ether-based solvent can be used, and water is preferable. Examples of the resin component used here include polymers such as phenol-based resins and acryl-based resins, and examples of the treatment include chromate treatment using an aminated phenol polymer having any of repeating units represented by the following general formulae (1) to (4). In the aminated phenol polymer, the repeating units represented by the following general formulae (1) to (4) may be contained alone, or may be contained in combination of two or more thereof. The acryl-based resin is preferably polyacrylic acid, an acrylic acid-methacrylic acid ester copolymer, an acrylic acid-maleic acid copolymer, an acrylic acid-styrene copolymer, or a derivative thereof such as a sodium salt, an ammonium salt or an amine salt thereof. In particular, a derivative of polyacrylic acid such as an ammonium salt, a sodium salt or an amine salt of polyacrylic acid is preferable. In the present disclosure, the polyacrylic acid means a polymer of acrylic acid. The acryl-based resin is also preferably a copolymer of acrylic acid and dicarboxylic acid or dicarboxylic anhydride, and is also preferably an ammonium salt, a sodium salt or an amine salt of a copolymer of acrylic acid and dicarboxylic acid or dicarboxylic anhydride. The acryl-based resins may be used alone, or may be used in combination of two or more thereof.

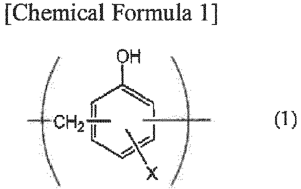

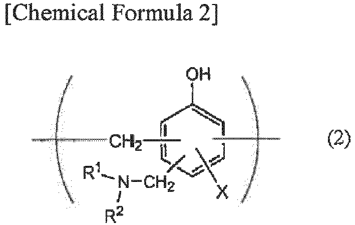

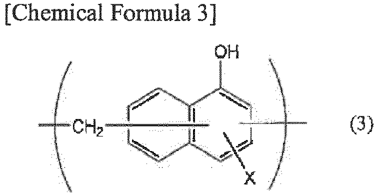

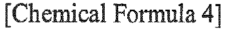

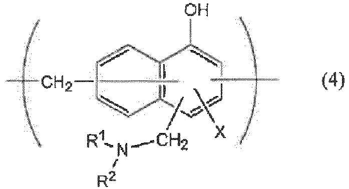

In the general formulae (1) to (4), X represents a hydrogen atom, a hydroxy group, an alkyl group, a hydroxyalkyl group, an allyl group, or a benzyl group. R¹ and R² are the same or different, and each represents a hydroxy group, an alkyl group, or a hydroxyalkyl group. In the general formulae (1) to (4), examples of the alkyl group represented by X, R¹ and R² include linear or branched alkyl groups with a carbon number of 1 to 4, such as a methyl group, an ethyl group, a n-propyl group, an isopropyl group, a n-butyl group, an isobutyl group, and a tert-butyl group. Examples of the hydroxyalkyl group represented by X, R¹ and R² include linear or branched alkyl groups with a carbon number of 1 to 4, which is substituted with one hydroxy group, such as a hydroxymethyl group, a 1-hydroxyethyl group, a 2-hydroxyethyl group, a 1-hydroxypropyl group, a 2-hydroxypropyl group, a 3-hydroxypropyl group, a 1-hydroxybutyl group, a 2-hydroxybutyl group, a 3-hydroxybutyl group, and a 4-hydroxybutyl group. In the general formulae (1) to (4), the alkyl group and the hydroxyalkyl group represented by X, R¹ and R² may be the same or different. In the general formulae (1) to (4), X is preferably a hydrogen atom, a hydroxy group or a hydroxyalkyl group. A number average molecular weight of the aminated phenol polymer having repeating units represented by the general formulae (1) to (4) is preferably about 500 to 1,000,000, and more preferably about 1,000 to 20,000, for example. The aminated phenol polymer is produced by, for example, performing polycondensation of a phenol compound or a naphthol compound with formaldehyde to prepare a polymer including repeating units represented by the general formula (1) or the general formula (3), and then introducing a functional group (-CH₂NR¹R²) into the obtained polymer using formaldehyde and an amine (R¹R²NH). The aminated phenol polymers are used alone, or used in combination of two or more thereof.

Other examples of the corrosion-resistant film include thin films formed by corrosion prevention treatment of coating type in which a coating agent containing at least one selected from the group consisting of a rare earth element oxide sol, an anionic polymer and a cationic polymer is applied. The coating agent may further contain phosphoric acid or a phosphate, and a crosslinker for crosslinking the polymer. In the rare earth element oxide sol, fine particles of a rare earth element oxide (e.g. particles having an average particle diameter of 100 nm or less) are dispersed in a liquid dispersion medium. Examples of the rare earth element oxide include cerium oxide, yttrium oxide, neodymium oxide and lanthanum oxide, and cerium oxide is preferable from the viewpoint of further improving adhesion. The rare earth element oxides contained in the corrosion-resistant film can be used alone, or used in combination of two or more thereof. As the liquid dispersion medium for the rare earth element oxide, for example, various solvents such as water, an alcohol-based solvent, a hydrocarbon-based solvent, a ketone-based solvent, an ester-based solvent, and an ether-based solvent can be used, and water is preferable. For example, the cationic polymer is preferably polyethyleneimine, an ion polymer complex formed of a polymer having polyethyleneimine and a carboxylic acid, primary amine-grafted acrylic resins obtained by graft-polymerizing a primary amine with an acrylic main backbone, polyallylamine or a derivative thereof, or aminated phenol. The anionic polymer is preferably poly (meth)acrylic acid or a salt thereof, or a copolymer containing (meth)acrylic acid or a salt thereof as a main component. The crosslinker is preferably at least one selected from the group consisting of a silane coupling agent and a compound having any of functional groups including an isocyanate group, a glycidyl group, a carboxyl group and an oxazoline group. In addition, the phosphoric acid or phosphate is preferably condensed phosphoric acid or a condensed phosphate.

Examples of the corrosion-resistant film include films formed by applying a dispersion of fine particles of a metal oxide such as aluminum oxide, titanium oxide, cerium oxide or tin oxide or barium sulfate in phosphoric acid to the surface of the barrier layer and performing baking treatment at 150°C or higher.

The corrosion-resistant film may have a laminated structure in which at least one of a cationic polymer and an anionic polymer is further laminated if necessary. Examples of the cationic polymer and the anionic polymer include those described above.

The composition of the corrosion-resistant film can be analyzed by, for example, time-of-flight secondary ion mass spectrometry.

The amount of the corrosion-resistant film to be formed on the surface of the barrier layer 3 in the chemical conversion treatment is not particularly limited, but for example when the coating-type chromate treatment is performed, and it is desirable that the chromic acid compound be contained in an amount of, for example, about 0.5 to 50 mg, preferably about 1.0 mg to 40 mg, in terms of chromium, the phosphorus compound be contained in an amount of, for example, about 0.5 to 50 mg, preferably about 1.0 to 40 mg, in terms of phosphorus, and the aminated phenol polymer be contained in an amount of, for example, about 1.0 to 200 mg, preferably about 5.0 mg to 150 mg, per 1 m² of the surface of the barrier layer 3.

The thickness of the corrosion-resistant film is not particularly limited, and is preferably about 1 nm to 20 µm, more preferably about 1 nm to 100 nm, still more preferably about 1 nm to 50 nm from the viewpoint of the cohesive force of the film and the adhesive strength with the barrier layer and the heat-sealable resin layer. The thickness of the corrosion-resistant film can be measured by observation with a transmission electron microscope or a combination of observation with a transmission electron microscope and energy dispersive X-ray spectroscopy or electron beam energy loss spectroscopy. By analyzing the composition of the corrosion-resistant film using time-of-flight secondary ion mass spectrometry, peaks derived from secondary ions from, for example, Ce, P and O (e.g. at least one of Ce₂PO₄⁺, CePO₄⁻ and the like) and secondary ions from, for example, Cr, P and O (e.g. at least one of CrPO₂⁺, CrPO₄⁻ and the like) are detected.

The chemical conversion treatment is performed in the following manner: a solution containing a compound to be used for formation of a corrosion-resistant film is applied to the surface of the barrier layer by a bar coating method, a roll coating method, a gravure coating method, an immersion method or the like, and heating is then performed so that the temperature of the barrier layer is about 70 to 200°C or less. The barrier layer may be subjected to a degreasing treatment by an alkali immersion method, an electrolytic cleaning method, an acid cleaning method, an electrolytic acid cleaning method or the like before the barrier layer is subjected to a chemical conversion treatment. When a degreasing treatment is performed as described above, the chemical conversion treatment of the surface of the barrier layer can be further efficiently performed. When an acid degreasing agent with a fluorine-containing compound dissolved in an inorganic acid is used for degreasing treatment, not only a metal foil degreasing effect can be obtained but also a metal fluoride can be formed, and in this case, only degreasing treatment may be performed.

When the corrosion-resistant film in the exterior material for an all-solid according to the present disclosure is analyzed by time-of-flight secondary ion mass spectrometry, the ratio of a peak intensity P_{PO3} derived from PO₃⁻ to a peak intensity P_{CrPO4} derived from CrPO₄⁻ (P_{PO3/CrPO4}) is preferably in the range of 6 to 120.

In the all-solid-state battery, it is desirable to continuously constrain the all-solid-state battery by high-pressure pressing from the outside of the exterior material even during use for suppressing delamination between the solid electrolyte and the negative active material layer or the positive active material layer as described above. However, when the solid electrolyte, the negative active material layer or the positive active material layer are continuously constrained in a high-pressure state from the outside of the exterior material of the all-solid-state battery, there is a possibility that the heat-sealable resin layer of the exterior material is strongly pressed against the battery element, so that the thickness of the heat-sealable resin layer (inner layer) of the exterior material decreases, leading to contact between the barrier layer laminated on the exterior material and the solid electrolyte. In particular, there is a problem that if while the barrier layer of the exterior material is in contact with the solid electrolyte, an electric current passes therebetween, an alloy is generated on the surface of the barrier layer, leading to deterioration of the barrier layer. In contrast, in the exterior material for an all-solid-state battery according to the present disclosure, a corrosion-resistant film is provided on the surface of the barrier layer 3 of the exterior material 10 to constrain the all-solid-state battery in a high-pressure state, and thus even when a current passes between the barrier layer 3 and the solid electrolyte layer 40 while the solid electrolyte extends through the heat-sealable resin layer 4 and the adhesive layer 5, an alloy is hardly generated on the surface of the barrier layer 3, so that deterioration of the barrier layer 3 is effectively suppressed. In particular, when the peak intensity ratio P_{PO3/CrPO4} of the corrosion-resistant film is in the range of 6 to 120, generation of an alloy on the surface of the barrier layer 3 is more effectively suppressed, so that deterioration of the barrier layer 3 is further effectively suppressed.

In the present disclosure, the ratio of the peak intensity P_{PO3} derived from PO₃⁻to the peak intensity P_{CrPO4} derived from CrPO₄⁻ (P_{PO3/CrPO4}) is preferably about 10 or more in terms of lower limit, and preferably about 115 or less, more preferably about 110 or less, still more preferably about 50 or less in terms of upper limit. The ratio P_{PO3/CrPO4} is preferably in the range of about 6 to 120, about 6 to 115, about 6 to 110, about 6 to 50, about 10 to 120, about 10 to 115, about 10 to 110, about 10 to 50, or about 25 to 32, particularly preferably about 10 to 50, especially preferably about 25 to 32.

In the present disclosure, when the corrosion-resistant film is analyzed by time-of-flight secondary ion mass spectrometry, the ratio of a peak intensity P_{PO2} derived from PO₂⁻ to a peak intensity P_{CrPO4} derived from CrPO₄⁻ (P_{PO2/CrPO4}) is preferably in the range of 7 to 70.

The ratio of the peak intensity P_{PO2} derived from PO₂⁻ to the peak intensity P_{CrPO4} derived from CrPO₄⁻ (P_{PO2/CrPO4}) is preferably in the range of 7 to 70, and from the viewpoint of more effectively suppressing deterioration of the barrier layer 3, the ratio P_{PO2/CrPO4} is preferably about 10 or more in terms of lower limit, and preferably about 65 or less, more preferably about 50 or less in terms of upper limit. The ratio P_{PO2/CrPO4} is preferably in the range of about 7 to 70, about 7 to 65, about 7 to 50, about 10 to 70, about 10 to 65, about 10 to 50 or about 15 to 37, particularly preferably about 10 to 50, especially preferably about 15 to 37.

In the present disclosure, when corrosion-resistant films are provided on both surfaces of the barrier layer 3, the peak intensity ratio P_{PO3/CrPO4} is preferably in the above-described range for each of the corrosion-resistant films on both surfaces, and the peak intensity ratio P_{PO2/CrPO4} is preferably in the above-described range.

Specifically, the method for analyzing the corrosion-resistant films by time-of-flight secondary ion mass spectrometry can be carried out under the following measurement conditions using a time-of-flight secondary ion mass spectrometer.

### (Measurement conditions)

Primary ion: double charged ion (Bi₃⁺⁺) of bismuth cluster
Primary ion accelerating voltage: 30 kV
Mass range (m/z): 0 to 1500
Measurement range: 100 µm × 100 µm
Number of scans: 16 scans/cycle
Number of pixels (one side): 256 pixels
Etching ion: Ar gas cluster ion beam (Ar-GCIB)
Etching ion accelerating voltage: 5.0 k

### [Heat-sealable resin layer 4]

In the exterior material for an all-solid-state battery according to the present disclosure, the heat-scalable resin layer 4 in the laminate M is a layer (sealant layer) that corresponds to an innermost layer and performs a function of hermetically sealing the battery element with the heat-sealable resin layers 4 heat-sealed to each other during construction of the all-solid-state battery.

The resin forming the heat-sealable resin layer 4 is not particularly limited as long as it can be heat-sealed, a resin containing a polyolefin skeleton such as a polyolefin or an acid-modified polyolefin is preferable. The resin forming the heat-sealable resin layer 4 can be confirmed to contain a polyolefin backbone by an analysis method such as infrared spectroscopy or gas chromatography-mass spectrometry. In addition, it is preferable that a peak derived from maleic anhydride is detected when the resin forming the heat-sealable resin layer 4 is analyzed by infrared spectroscopy. For example, when a maleic anhydride-modified polyolefin is measured by infrared spectroscopy, peaks derived from maleic anhydride are detected near wavenumbers of 1760 cm⁻¹ and 1780 cm⁻¹. When the heat-sealable resin layer 4 is a layer formed of a maleic anhydride-modified polyolefin, a peak derived from maleic anhydride is detected when measurement is performed by infrared spectroscopy. However, if the degree of acid modification is low, the peaks may be too small to be detected. In that case, the peaks can be analyzed by nuclear magnetic resonance spectroscopy.

Specific examples of the polyolefin to be acid-modified include polyethylenes such as low-density polyethylene, medium-density polyethylene, high-density polyethylene and linear low-density polyethylene; ethylene-α-olefin copolymers; polypropylene such as homopolypropylene, block copolymers of polypropylene (e.g., block copolymers of propylene and ethylene) and random copolymers of polypropylene (e.g., random copolymers of propylene and ethylene); propylene-α-olefin copolymers; and terpolymers of ethylene-butene-propylene. Among them, polypropylene is preferable. The polyolefin resin in the case of a copolymer may be a block copolymer or a random copolymer. These polyolefin-based resins may be used alone, or may be used in combination of two or more thereof.

The polyolefin may be a cyclic polyolefin. The cyclic polyolefin is a copolymer of an olefin and a cyclic monomer, and examples of the olefin as a constituent monomer of the cyclic polyolefin include ethylene, propylene, 4-methyl-1-pentene, styrene, butadiene and isoprene. Examples of the cyclic monomer as a constituent monomer of the cyclic polyolefin include cyclic alkenes such as norbornene; cyclic dienes such as cyclopentadiene, dicyclopentadiene, cyclohexadiene and norbornadiene. Among these polyolefins, cyclic alkenes are preferable, and norbornene is more preferable.

The acid-modified polyolefin is a polymer with the polyolefin modified by subjecting the polyolefin to block polymerization or graft polymerization with an acid component. As the polyolefin to be acid-modified, the above-mentioned polyolefins, copolymers obtained by copolymerizing polar molecules such as acrylic acid or methacrylic acid with the above-mentioned polyolefins, polymers such as crosslinked polyolefins, or the like can also be used. Examples of the acid component to be used for acid modification include carboxylic acids such as maleic acid, acrylic acid, itaconic acid, crotonic acid, maleic anhydride and itaconic anhydride, and anhydrides thereof.

The acid-modified polyolefin may be an acid-modified cyclic polyolefin. The acid-modified cyclic polyolefin is a polymer obtained by copolymerizing a part of monomers forming the cyclic polyolefin in place of an acid component, or block-polymerizing or graft-polymerizing an acid component with the cyclic polyolefin. The cyclic polyolefin to be modified with an acid is the same as described above. The acid component to be used for acid modification is the same as the acid component used for modification of the polyolefin.

Examples of preferred acid-modified polyolefins include polyolefins modified with a carboxylic acid or an anhydride thereof, polypropylene modified with a carboxylic acid or an anhydride thereof, maleic anhydride-modified polyolefins, and maleic anhydride-modified polypropylene.

It is also preferable that the heat-sealable resin layer 4 is formed from a polybutylene terephthalate film. The polybutylene terephthalate film may be a stretched polybutylene terephthalate film or an unstretched polybutylene terephthalate film, and is preferably an unstretched polybutylene terephthalate film. The polybutylene terephthalate film that forms the heat-sealable resin layer 4 may be formed into the heat-sealable resin layer 4 by laminating a polybutylene terephthalate film prepared in advance with the barrier layer 3, the adhesive layer 5 and the like, or may be formed into a film by melt-extruding a resin for forming the polybutylene terephthalate film and laminated with the barrier layer 3, the adhesive layer 5 and the like.

The heat-sealable resin layer 4 may be formed from one resin alone, or may be formed from a blend polymer obtained by combining two or more resins. Further, the heat-sealable resin layer 4 may be composed of only one layer, or may be composed of two or more layers with the same resin component or different resin components. When the heat-sealable resin layer 4 is composed of two or more layers, for example, at least one layer is preferably formed from a polybutylene terephthalate film, and the polybutylene terephthalate film is preferably an innermost layer. When the heat-sealable resin layer 4 is formed from two or more layers, the layer which is not formed from a polybutylene terephthalate film may be, for example, a layer formed from a polyolefin such as polypropylene or polyethylene, an acid-modified polyolefin such as acid-modified polypropylene or acid-modified polyethylene, or the like. When the heat-sealable resin layer 4 is composed of two or more layers, at least the layer forming the innermost layer of the exterior material 10 for an all-solid-state battery, among the two or more heat-sealable resin layers 4, is preferably a polybutylene terephthalate film. At least the layer which is in contact with the adhesive layer 5 is preferably a polybutylene terephthalate film.

The heat-sealable resin layer 4 may contain a lubricant etc. if necessary. When the heat-sealable resin layer 4 contains a lubricant, the moldability of the exterior material for an all-solid-state battery can be improved. The lubricant is not particularly limited, and a known lubricant can be used. The lubricants may be used alone, or may be used in combination of two or more thereof.

The lubricant is not particularly limited, and is preferably an amide-based lubricant. Specific examples of the lubricant include those exemplified for the base material layer 1. The lubricants may be used alone, or may be used in combination of two or more thereof.

When a lubricant is present on the surface of the heat-sealable resin layer 4, the amount of the lubricant present is not particularly limited, and is preferably about 10 to 50 mg/m², more preferably about 15 to 40 mg/m² from the viewpoint of improving the moldability of the electron packaging material.

The lubricant present on the surface of the heat-sealable resin layer 4 may be one obtained by exuding the lubricant contained in the resin forming the heat-sealable resin layer 4, or one obtained by applying a lubricant to the surface of the heat-sealable resin layer 4.

The thickness of the heat-sealable resin layer 4 is not particularly limited as long as the heat-sealable resin layers are heat-sealed to each other to perform a function of sealing the battery element, and the thickness is, for example, about 100 µm or less, preferably about 85 µm or less, more preferably about 15 to 85 µm. For example, when the thickness of the adhesive layer 5 described later is 10 µm or more, the thickness of the heat-sealable resin layer 4 is preferably about 85 µm or less, more preferably about 15 to 45 µm. For example, when the thickness of the adhesive layer 5 described later is less than 10 µm or the adhesive layer 5 is not provided, the thickness of the heat-sealable resin layer 4 is preferably about 20 µm or more, more preferably about 35 to 85 µm.

### [Adhesive layer 5]

In the exterior material for an all-solid-state battery according to the present disclosure, the adhesive layer 5 in the laminate M is a layer provided between the barrier layer 3 (or corrosion-resistant film) and the heat-sealable resin layer 4 if necessary for firmly bonding these layers to each other.

The adhesive layer 5 is formed from a resin capable of bonding the barrier layer 3 and the heat-sealable resin layer 4 to each other. The resin to be used for forming the adhesive layer 5 is, for example, the same as that of the adhesive exemplified for the adhesive agent layer 2. Preferably, the resin to be used for forming the adhesive layer 5 contains a polyolefin backbone. Examples thereof include the polyolefins and acid-modified polyolefins exemplified for the heat-sealable resin layer 4 described above. The resin forming the adhesive layer 5 can be confirmed to contain a polyolefin backbone by an analysis method such as infrared spectroscopy or gas chromatography-mass spectrometry, and the analysis method is not particularly limited. In addition, it is preferable that a peak derived from maleic anhydride is detected when the resin forming the adhesive layer 5 is analyzed by infrared spectroscopy. For example, when a maleic anhydride-modified polyolefin is measured by infrared spectroscopy, peaks derived from maleic anhydride are detected near wavenumbers of 1760 cm⁻¹ and 1780 cm⁻¹. However, if the degree of acid modification is low, the peaks may be too small to be detected. In that case, the peaks can be analyzed by nuclear magnetic resonance spectroscopy.

From the viewpoint of firmly bonding the barrier layer 3 and the heat-sealable resin layer 4 to each other, it is preferable that the adhesive layer 5 contains an acid-modified polyolefin. As the acid-modified polyolefin, polyolefins modified with a carboxylic acid or an anhydride thereof, polypropylene modified with a carboxylic acid or an anhydride thereof, maleic anhydride-modified polyolefins, and maleic anhydride-modified polypropylene is especially preferable.

Further, from the viewpoint of obtaining an exterior material for an all-solid-state battery which is excellent in shape stability after molding while having a small thickness, the adhesive layer 5 is more preferably a cured product of a resin composition containing an acid-modified polyolefin and a curing agent. Preferred examples of the acid-modified polyolefin include those described above.

The adhesive layer 5 is preferably a cured product of a resin composition containing an acid-modified polyolefin and at least one selected from the group consisting of a compound having an isocyanate group, a compound having an oxazoline group, and a compound having an epoxy group, especially preferably a cured product of a resin composition containing an acid-modified polyolefin and at least one selected from the group consisting of a compound having an isocyanate group and a compound having an epoxy group. Preferably, the adhesive layer 5 preferably contains at least one selected from the group consisting of polyurethane, polyester and epoxy resin. More preferably, the adhesive layer 5 contains polyurethane and epoxy resin. As the polyester, for example, an amide ester resin is preferable. The amide ester resin is generally produced by reaction of a carboxyl group with an oxazoline group. The adhesive layer 5 is more preferably a cured product of a resin composition containing at least one of these resins and the acid-modified polyolefin. When an unreacted substance of a curing agent, such as a compound having an isocyanate group, a compound having an oxazoline group, or an epoxy resin remains in the adhesive layer 5, the presence of the unreacted substance can be confirmed by, for example, a method selected from infrared spectroscopy, Raman spectroscopy, time-of-flight secondary ion mass spectrometry (TOF-SIMS) and the like.

From the viewpoint of further improving adhesion between the barrier layer 3 and the adhesive layer 5, the adhesive layer 5 is preferably a cured product of a resin composition containing a curing agent having at least one selected from the group consisting of an oxygen atom, a heterocyclic ring, a C=N bond, and a C-O-C bond. Examples of the curing agent having a heterocyclic ring include curing agents having an oxazoline group, and curing agents having an epoxy group. Examples of the curing agent having a C=N bond include curing agents having an oxazoline group and curing agents having an isocyanate group. Examples of the curing agent having a C-O-C bond include curing agents having an oxazoline group, curing agents having an epoxy group, and polyurethane. Whether the adhesive layer 5 is a cured product of a resin composition containing any of these curing agents can be confirmed by, for example, a method such as gas chromatography-mass spectrometry (GCMS), infrared spectroscopy (IR), time-of-flight secondary ion mass spectrometry (TOF-SIMS), or X-ray photoelectron spectroscopy (XPS).

The compound having an isocyanate group is not particularly limited, and is preferably a polyfunctional isocyanate compound from the viewpoint of effectively improving adhesion between the barrier layer 3 and the adhesive layer 5. The polyfunctional isocyanate compound is not particularly limited as long as it is a compound having two or more isocyanate groups. Specific examples of the polyfunctional isocyanate-based curing agent include pentane diisocyanate (PDI), isophorone diisocyanate (IPDI), hexamethylene diisocyanate (HDI), tolylene diisocyanate (TDI), diphenylmethane diisocyanate (MDI), polymerized or nurated products thereof, mixtures thereof, and copolymers of these compounds with other polymers. Examples thereof include adduct forms, biuret forms, and isocyanurate forms.

The content of the compound having an isocyanate group in the adhesive layer 5 is preferably in the range of 0.1 to 50 mass%, more preferably in the range of 0.5 to 40 mass% in the resin composition forming the adhesive layer 5. This enables effective improvement of adhesion between the barrier layer 3 and the adhesive layer 5.

The compound having an oxazoline group is not particularly limited as long as it is a compound having an oxazoline backbone. Specific examples of the compound having an oxazoline group include compounds having a polystyrene main chain and compounds having an acrylic main chain. Examples of the commercially available product include EPOCROS series manufactured by Nippon Shokubai Co., Ltd.

The proportion of the compound having an oxazoline group in the adhesive layer 5 is preferably in the range of 0.1 to 50 mass%, more preferably in the range of 0.5 to 40 mass% in the resin composition forming the adhesive layer 5. This enables effective improvement of adhesion between the barrier layer 3 and the adhesive layer 5.

Examples of the compound having an epoxy group include epoxy resins. The epoxy resin is not particularly limited as long as it is a resin capable of forming a crosslinked structure by epoxy groups existing in the molecule, and a known epoxy resin can be used. The weight average molecular weight of the epoxy resin is preferably about 50 to 2000, more preferably about 100 to 1000, still more preferably about 200 to 800. In the present invention, the weight average molecular weight of the epoxy resin is a value obtained by performing measurement by gel permeation chromatography (GPC) under the condition of using polystyrene as a standard sample.

Specific examples of the epoxy resin include glycidyl ether derivatives of trimethylolpropane, bisphenol A diglycidyl ether, modified bisphenol A diglycidyl ether, novolak glycidyl ether, glycerin polyglycidyl ether and polyglycerin polyglycidyl ether. The epoxy resins may be used alone, or may be used in combination of two or more thereof.

The proportion of the epoxy resin in the adhesive layer 5 is preferably in the range of 0.1 to 50 mass%, more preferably in the range of 0.5 to 40 mass% in the resin composition forming the adhesive layer 5. This enables effective improvement of adhesion between the barrier layer 3 and the adhesive layer 5.

The polyurethane is not particularly limited, and a known polyurethane can be used. The adhesive layer 5 may be, for example, a cured product of two-liquid curable polyurethane.

The proportion of the polyurethane in the adhesive layer 5 is preferably in the range of 0.1 to 50 mass%, more preferably in the range of 0.5 to 40 mass% in the resin composition forming the adhesive layer 5.

When the adhesive layer 5 is a cured product of a resin composition containing at least one selected from the group consisting of a compound having an isocyanate group, a compound having an oxazoline group and an epoxy resin, and the acid-modified polyolefin, the acid-modified polyolefin functions as a main agent, and the compound having an isocyanate group, the compound having an oxazoline group, and the compound having an epoxy group each function as a curing agent.

The thickness of the adhesive layer 5 is preferably about 50 µm or less, about 40 µm or less, about 30 µm or less, about 20 µm or less, or about 5 µm or less, and preferably about 0.1 µm or more or about 0.5 µm or more. The thickness is preferably about 0.1 to 50 µm, about 0.1 to 40 µm, about 0.1 to 30 µm, about 0.1 to 20 µm, about 0.1 to 5 µm, about 0.5 to 50 µm, about 0.5 to 40 µm, about 0.5 to 30 µm, about 0.5 to 20 µm, or about 0.5 to 5 µm. More specifically, the thickness is preferably about 1 to 10 µm, more preferably about 1 to 5 µm when the adhesive exemplified for the adhesive agent layer 2 or a cured product of an acid-modified polyolefin and a curing agent. When any of the resins exemplified for the heat-sealable resin layer 4 is used, the thickness of the adhesive layer is preferably about 2 to 50 µm, more preferably about 10 to 40 µm. When the adhesive layer 5 is a cured product of a resin composition containing the adhesive exemplified for the adhesive agent layer 2 or an acid-modified polyolefin and a curing agent, the adhesive layer 5 can be formed by, for example, applying the resin composition and curing the resin composition by heating or the like. When the resin exemplified for the heat-sealable resin layer 4 is used, for example, extrusion molding of the heat-sealable resin layer 4 and the adhesive layer 5 can be performed.

### [Surface coating layer 6]

The exterior material of the present disclosure may include a surface coating layer 6 on the base material layer 1 (on the base material layer 1 on a side opposite to the barrier layer 3) in the laminate M if necessary for the purpose of improving at least one of designability, scratch resistance, moldability and the like. The surface coating layer 6 is a layer located on the outermost layer side of the exterior material when the all-solid-state battery is constructed using the exterior material.

The surface coating layer 6 can be formed from, for example, a resin such as polyvinylidene chloride, polyester, polyurethane, acrylic resin, or epoxy resin.

When the resin forming the surface coating layer 6 is a curable resin, the resin may be any of a one-liquid curable type and a two-liquid curable type, and is preferably a two-liquid curable type. Examples of the two-liquid curable resin include two-liquid curable polyurethane, two-liquid curable polyester and two-liquid curable epoxy resins. Of these, two-liquid curable polyurethane is preferable.

Examples of the two-liquid curable polyurethane include polyurethane which contains a main agent containing a polyol compound and a curing agent containing an isocyanate compound. The polyurethane is preferably two-liquid curable polyurethane having polyol such as polyester polyol, polyether polyol or acrylic polyol as a main agent, and aromatic or aliphatic polyisocyanate as a curing agent. Preferably, polyester polyol having a hydroxyl group in the side chain in addition to a hydroxyl group at the end of the repeating unit is used as the polyol compound.

If necessary, the surface coating layer 6 may contain additives such as the lubricant, an anti-blocking agent, a matting agent, a flame retardant, an antioxidant, a tackifier and an anti-static agent on at least one of the surface and the inside of the surface coating layer 6 according to the functionality and the like to be imparted to the surface coating layer 6 and the surface thereof. The additives are in the form of, for example, fine particles having an average particle diameter of about 0.5 nm to 5 µm. The average particle diameter of the additives is a median diameter measured by a laser diffraction/scattering particle size distribution measuring apparatus.

The additives may be either inorganic substances or organic substances. The shape of the additive is not particularly limited, and examples thereof include a spherical shape, a fibrous shape, a plate shape, an amorphous shape and a scaly shape.

Specific examples of the additives include talc, silica, graphite, kaolin, montmorillonite, mica, hydrotalcite, silica gel, zeolite, aluminum hydroxide, magnesium hydroxide, zinc oxide, magnesium oxide, aluminum oxide, neodymium oxide, antimony oxide, titanium oxide, cerium oxide, calcium sulfate, barium sulfate, calcium carbonate, calcium silicate, lithium carbonate, calcium benzoate, calcium oxalate, magnesium stearate, alumina, carbon black, carbon nanotubes, high-melting-point nylons, acrylate resins, crosslinked acryl, crosslinked styrene, crosslinked polyethylene, benzoguanamine, gold, aluminum, copper and nickel. The additives may be used alone, or may be used in combination of two or more thereof. Of these additives, silica, barium sulfate and titanium oxide are preferable from the viewpoint of dispersion stability, costs, and so on. The surface of the additive may be subjected to various kinds of surface treatments such as insulation treatment and dispersibility enhancing treatment.

The method for forming the surface coating layer 6 is not particularly limited, and examples thereof include a method in which a resin for forming the surface coating layer 6 is applied. When the additive is added to the surface coating layer 6, a resin mixed with the additive may be applied.

The thickness of the surface coating layer 6 is not particularly limited as long as the above-mentioned function as the surface coating layer 6 is performed, and it is, for example, about 0.5 to 10 µm, preferably about 1 to 5 µm.

The method for producing an exterior material for an all-solid-state battery is not particularly limited as long as a laminate is obtained in which the layers of the exterior material for an all-solid-state battery according to the present disclosure are laminated. Examples thereof include a method including the step of laminating at least the base material layer 1, the barrier layer 3 and the heat-sealable resin layer 4 in this order.

An example of the method for producing the exterior material for an all-solid-state battery according to the present disclosure is as follows. First, a laminate including the base material layer 1, the adhesive agent layer 2 and the barrier layer 3 in this order (hereinafter, the laminate may be described as a "laminate A") is formed. Specifically, the laminate A can be formed by a dry lamination method in which an adhesive to be used for formation of the adhesive agent layer 2 is applied onto the base material layer 1 or the barrier layer 3, the surface of which is subjected to a chemical conversion treatment if necessary, using a coating method such as a gravure coating method or a roll coating method, and dried, the barrier layer 3 or the base material layer 1 is then laminated, and the adhesive agent layer 2 is cured.

Then, the heat-sealable resin layer 4 is laminated on the barrier layer 3 of the laminate A. When the heat-sealable resin layer 4 is laminated directly on the barrier layer 3, a resin component that forms the heat-sealable resin layer 4 may be applied onto the barrier layer 3 of the laminate A by a method such as a gravure coating method or a roll coating method. When the adhesive layer 5 is provided between the barrier layer 3 and the heat-sealable resin layer 4, mention is made of, for example, (1) a method in which the adhesive layer 5 and the heat-sealable resin layer 4 are co-extruded to be laminated on the barrier layer 3 of the laminate A (co-extrusion lamination method); (2) a method in which the adhesive layer 5 and the heat-sealable resin layer 4 are laminated to form a laminate separately, and the laminate is laminated on the barrier layer 3 of the laminate A by a thermal lamination method; (3) a method in which an adhesive for formation of the adhesive layer 5 is laminated on the barrier layer 3 of the laminate A by an extrusion method or a method in which the adhesive is applied by solution coating, dried at a high temperature and baked, and the heat-sealable resin layer 4 formed in a sheet shape beforehand is laminated on the adhesive layer 5 by a thermal lamination method; and (4) a method in which the melted adhesive layer 5 is poured between the barrier layer 3 of the laminate A and the heat-sealable resin layer 4 formed in a sheet shape beforehand, and simultaneously the laminate A and the heat-sealable resin layer 4 are bonded together with the adhesive layer 5 interposed therebetween (sandwich lamination).

When the surface coating layer 6 is provided, the surface coating layer 6 is laminated on a surface of the base material layer 1 on a side opposite to the barrier layer 3. The surface coating layer 6 can be formed by, for example, coating a surface of the base material layer 1 with the resin that forms the surface coating layer 6. The order of the step of laminating the barrier layer 3 on a surface of the base material layer 1 and the step of laminating the surface coating layer 6 on a surface of the base material layer 1 is not particularly limited. For example, the surface coating layer 6 may be formed on a surface of the base material layer 1, followed by forming the barrier layer 3 on a surface of the base material layer 1 on a side opposite to the surface coating layer 6.

The laminate M including the surface coating layer 6 provided if necessary, the base material layer 1, the adhesive agent layer 2 provided if necessary, the corrosion-resistant film provided if necessary, the barrier layer, the corrosion-resistant film provided if necessary, the adhesive layer 5 provided if necessary, and the heat-sealable resin layer 4 in this order is formed in the manner described above, and the laminate may be further subjected to a heating treatment of a hot roll contact type, a hot air type, a near-infrared type, a far-infrared type or the like for enhancing the bondability of the adhesive agent layer 2 and the adhesive layer 5 provided if necessary. As conditions for such a heating treatment, for example, the temperature is about 150 to 250°C, and the time is about 1 to 5 minutes.

In the exterior material for an all-solid-state battery, the layers that form the laminate M may be subjected to a surface activation treatment such as a corona treatment, a blast treatment, an oxidation treatment or an ozone treatment if necessary for improving or stabilizing film formability, lamination processing and final product secondary processing (pouching and embossing molding) suitability, and the like. For example, by subjecting at least one surface of the base material layer 1 to a corona treatment, film formability, lamination processing and final product secondary processing suitability, and the like can be improved. Further, for example, by subjecting a surface of the base material layer 1, which is opposite to the barrier layer 3, to a corona treatment, the ink printability of the surface of the base material layer 1 can be improved.

As described above, the insulating layer 11 may be laminated on the heat-sealable resin layer 4 before being applied to the all-solid-state battery, or the insulating layer 11 may be disposed between the exterior material 10 for an all-solid-state battery according to the present disclosure and the battery element when applied to the all-solid-state battery without laminating the insulating layer 11 before the exterior material 10 is applied to the all-solid-state battery.

### EXAMPLES

Hereinafter, the present disclosure will be described in detail by way of examples and comparative examples. However, the present disclosure is not limited to examples.

### <Production Example 1 of exterior material>

As a base material layer, a laminated film was prepared in which a polyethylene terephthalate film (12 µm), an adhesive agent layer (two-liquid curable urethane adhesive (polyol compound and aromatic isocyanate compound), thickness: 3 µm) and a biaxially stretched nylon film (thickness: 15 µm) were laminated in this order. Next, a barrier layer including an aluminum foil (JIS H 4160: 1994 A8021H-O, thickness: 40 µm, a corrosion-resistant film including chromic acid is formed on both surfaces) was laminated on a biaxially stretched nylon film (thickness: 15 µm) of the base material layer by a dry lamination method. Specifically, a two-liquid curable urethane adhesive (polyol compound and aromatic isocyanate compound) was applied to one surface of the aluminum foil to form an adhesive agent layer (thickness after curing: 3 µm) was formed on the aluminum foil. The adhesive agent layer on the aluminum foil and the biaxially stretched nylon film were then laminated, and aging treatment was then performed to prepare a laminate of base material layer/adhesive agent layer/barrier layer. Next, maleic anhydride-modified polypropylene (thickness: 40 µm) as an adhesive layer and polypropylene (thickness: 40 µm) as a heat-sealable resin layer were co-extruded onto the barrier layer of the obtained laminate to laminate an adhesive layer and a heat-sealable resin layer on the barrier layer. Next, the obtained laminate was aged and heated to obtain a laminate M1 in which a polyethylene terephthalate film (12 µm), an adhesive agent layer (3 µm), a biaxially stretched nylon film (15 µm), an adhesive agent layer (3 µm), a barrier layer (40 µm), an adhesive layer (40 µm) and a heat-sealable resin layer (40 µm) were laminated in this order. In production of the all-solid-state battery, the insulating layer is disposed inside the heat-sealable resin layer to obtain an exterior material for an all-solid-state battery as described later.

### <Production Example 2 of exterior material>

Except that a polyethylene terephthalate film (25 µm) was used as a base material layer, the same procedure as in Production Example 1 was carried out to obtain a laminate M2 in which a polyethylene terephthalate film (25 µm), an adhesive agent layer (3 µm), a barrier layer (40 µm), an adhesive layer (40 µm) and a heat-sealable resin layer (40 µm) were laminated in this order.

### <Production Example 3 of exterior material>

Except that a polybutylene terephthalate film was laminated on a barrier layer of a laminate of base material layer/adhesive agent layer/barrier layer by a dry lamination method using a polybutylene terephthalate film (25 µm) as a heat-sealable resin layer and a two-liquid curable urethane adhesive agent (polyol compound and aromatic isocyanate compound) as an adhesive layer, the same procedure as in Production Example 1 was carried out to obtain a laminate M3 in which a polyethylene terephthalate film (12 µm), an adhesive agent layer (3 µm), a biaxially stretched nylon film (15 µm), an adhesive agent layer (3 µm), a barrier layer (40 µm), an adhesive layer (3 µm) and a heat-sealable resin layer (25 µm) was laminated in this order.

### <Production of all-solid-state battery>

### [Example 1]

An all-solid-state battery 70 as shown in the schematic diagram of Fig. 1 was prepared. Specifically, in a dry environment at a dew point of -50°C or lower, a positive electrode layer 30 having LiCoO₂ laminated as a positive active material layer 31 (thickness: 100 µm) on an aluminum alloy foil as a positive electrode current collector 32 (thickness: 20 µm), and a negative electrode layer 20 having graphite laminated as a negative active material layer 21 (thickness: 120 µm) on a SUS 304 foil as a negative electrode current collector 22 (thickness: 10 µm) were laminated with a solid electrolyte layer (Li₂S : P₂S₅ = 75 : 25, thickness: 100 µm) interposed therebetween to prepare a unit cell 50. In plan view of the all-solid-state battery, the positive active material layer 31 has a length of 30 mm and a width of 30 mm, the positive electrode current collector 32 has a length of 40 mm and a width of 35 mm, the negative active material layer 21 has a length of 32 mm and a width of 32 mm, the negative electrode current collector 22 has a length of 40 mm and a width of 35 mm, and the solid electrolyte layer has a length of 32 mm and a width of 32 mm. Next, a terminal 60 was bonded to each of the positive electrode current collector 32 and the negative electrode current collector 22.

Next, the exterior material (laminate M1) (having a length of 60 mm and a width of 60 mm) was prepared. Next, a polyethylene terephthalate film (PET, thickness: 12 µm, melting point: 265°C, piercing strength shown in Table 1) as an insulating layer 11 was placed on a surface of the positive electrode current collector 32 of the unit cell 50 so as to cover the entire surface of the positive active material of the all-solid-state battery in plan view of the all-solid-state battery. Here, as described above, the exterior material was cold-molded to form a storage portion (a concave portion having a shape protruding from the heat-sealable resin layer side to the base material layer side), and a polyethylene terephthalate film (insulating layer 11) sized to enter the storage portion was then placed in the storage portion, and the unit cell was placed thereon. By adopting this step, it was easy to determine a position at which the insulating layer 11 was disposed. In this state, the unit cell 50 was sandwiched vertically in such a manner that the heat-sealable resin layers of the two exterior materials provided with the concave portion were opposed to each other, and the peripheral edge portion of the exterior material was heat-sealed in a vacuum environment to prepare an all-solid-state battery. As in the schematic diagram of Fig. 4, the insulating layers are disposed on both surface sides of the all-solid-state battery.

The corrosion-resistant film was formed on both surfaces of the barrier layer in the following manner. A treatment liquid containing 43 parts by mass of an aminated phenol polymer, 16 parts by mass of chromium fluoride and 13 parts by mass of phosphoric acid based on 100 parts by mass of water was prepared, and the treatment liquid was applied to both surfaces of the barrier layer (film thickness after drying is 10 nm), and heated and dried for about 3 seconds at a temperature of about 190°C in terms of the surface temperature of the barrier layer.

### [Example 2]

Except that with respect to Production Example 1, a polyethylene terephthalate film (thickness: 5 µm, melting point: 265°C, piercing strength in Table 2) was used as an insulating layer of the exterior material (laminate M1), the same procedure as in Example 1 was carried out to prepare an all-solid-state battery.

### [Example 3]

Except that with respect to Production Example 1, a polyethylene terephthalate film (thickness: 25 µm, melting point: 265°C, piercing strength in Table 2) was used as an insulating layer of the exterior material (laminate M1), the same procedure as in Example 1 was carried out to prepare an all-solid-state battery.

### [Example 4]

Except that with respect to Production Example 1, a polyphenylene sulfide film (thickness: 16 µm, melting point: 290°C, piercing strength in Table 2) was used as an insulating layer of the exterior material (laminate M1), the same procedure as in Example 1 was carried out to prepare an all-solid-state battery.

### [Example 5]

Except that with respect to Production Example 1, a polyether ether ketone film (thickness: 12 µm, melting point: 334°C, piercing strength in Table 2) was used as an insulating layer of the exterior material (laminate M1), the same procedure as in Example 1 was carried out to prepare an all-solid-state battery.

### [Example 6]

Except that with respect to Production Example 1, a polyethylene naphthalate film (thickness: 25 µm, melting point: 265°C, piercing strength in Table 2) was used as an insulating layer of the exterior material (laminate M1), the same procedure as in Example 1 was carried out to prepare an all-solid-state battery.

### [Example 7]

Except that with respect to Production Example 1, a polybutylene terephthalate film (thickness: 15 µm, melting point: 260°C, piercing strength in Table 2) was used as an insulating layer of the exterior material (laminate M1), the same procedure as in Example 1 was carried out to prepare an all-solid-state battery.

### [Example 8]

Except that with respect to Production Example 1, a polybutylene terephthalate film (thickness: 25 µm, melting point: 260°C, piercing strength in Table 2) was used as an insulating layer of the exterior material (laminate M1), the same procedure as in Example 1 was carried out to prepare an all-solid-state battery.

### [Example 9]

Except that the exterior material (laminate M2) produced in Production Example 2 was used instead of the exterior material (laminate M1) produced in Production Example 1, the same procedure as in Example 1 was carried out to prepare an all-solid-state battery,

### [Example 10]

Except that the exterior material (laminate M3) produced in Production Example 3 was used instead of the exterior material (laminate M1) produced in Production Example 1, the same procedure as in Example 1 was carried out to prepare an all-solid-state battery. In the exterior material (laminate M3) used in Example 10, a polybutylene terephthalate film is used as a heat-sealable resin layer, and excellent heat resistance can be exhibited even when the thickness is small. That is, the overall thickness of the exterior material can be reduced, and excellent heat resistance can be exhibited.

### [Comparative Example 1]

Except that the insulating layer 11 was not used, an all-solid-state battery was produced in the same manner as in Example 1.

### <Piercing strength>

The piercing strength of the insulating layer was measured by a method conforming to JIS Z 1707: 1997. Specifically, in a measurement environment at 23 ± 2°C and a relative humidity of 50 ± 5%, a test piece is fixed with a table having a diameter of 115 mm and having an opening with a diameter of 15 mm at the center, and a pressing plate, a main surface of the test pieces is pierced at a speed of 50 ± 5 mm per minute with a semicircular needle having a diameter of 1.0 mm and a tip shape radius of 0.5 mm, and the maximum stress before the needle completely passes through the test piece is measured. The number of test pieces is 5, and an average for the test pieces was determined. As measuring equipment, ZP-50N (force gauge) manufactured by IMADA Architects Ltd. and MX2-500N (measurement stand) manufactured by IMADA Architects Ltd. were used.

### <Time-of-flight secondary ion mass spectrometry>

The corrosion-resistant film formed on the surface of the barrier layer (aluminum alloy foil) was analyzed in the following manner. First, the barrier layer and the adhesive layer were peeled from each other. Here, the film was physically delaminated without using water, an organic solvent, an aqueous solution of an acid or an alkali, or the like. After delamination between the barrier layer and the adhesive layer, the adhesive layer remained on the surface of the barrier layer, and the remaining adhesive layer was removed by etching with Ar-GCIB. For the surface of the barrier layer thus obtained, the barrier layer protective film was analyzed by time-of-flight secondary ion mass spectrometry. The peak intensities P_{CrPO4}, P_{PO2} and P_{PO3} derived from CrPO₄⁻, PO₂⁻ and PO₃⁻ were 3.8 × 10⁴, 6.3 × 10⁵ and 1.0 × 10⁶, respectively.

Details of the measuring apparatus and measurement conditions for time-of-flight secondary ion mass spectrometry are as follows.

Measuring apparatus: time-of-flight secondary ion mass spectrometer TOF.SIMS5 manufactured by ION-TOF Corporation

### (Measurement conditions)

Primary ion: double charged ion (Bi₃⁺⁺) of bismuth cluster
Primary ion accelerating voltage: 30 kV
Mass range (m/z): 0 to 1500
Measurement range: 100 µm × 100 µm
Number of scans: 16 scans/cycle
Number of pixels (one side): 256 pixels
Etching ion: Ar gas cluster ion beam (Ar-GCIB)
Etching ion accelerating voltage: 5.0 kV

### <Evaluation on short circuit by constraint in high-temperature and high-pressure pressing>

For each of the all-solid-state batteries obtained above, the effect of suppressing a short circuit was evaluated in the following manner. First, two stainless steel plates having the same size as the positive active material layer 31 (having a length of 30 mm and a width of 30 mm) were prepared. Next, the all-solid-state battery was sandwiched vertically in such a manner that the stainless steel plate covered the entire surface of the positive active material layer in plan view of the all-solid-state battery 70. Next, in an environment at 120°C, a load of 100 MPa was applied to the upper and lower stainless steel plates, and in this state, the stainless steel plates were held for 24 hours. Next, the stainless steel plate was removed from the all-solid-state battery, and the positive electrode terminal and the aluminum alloy foil of the exterior material were connected to examine conduction. It was determined that a short-circuit was suppressed (A) when conduction did not occur, and it was determined that a short-circuit was not suppressed (C) when conduction occurred. Table 1 shows the results.

**[Table 1]**

| | Presence or absence of insulating layer | Evaluation on short-circuit by constraint at high temperature and high pressure |
|---|---|---|
| Example 1 | Present | A |
| Example 2 | Present | A |
| Example 3 | Present | A |
| Example 4 | Present | A |
| Example 5 | Present | A |
| Example 6 | Present | A |
| Example 7 | Present | A |
| Example 8 | Present | A |
| Example 9 | Present | A |
| Comparative Example 1 | Absent | C |

**[Table 2]**

| Insulating layer | Thickness (µm) | Melting point (°C) | Piercing strength (N) |
|---|---|---|---|
| PET | 5 | 265 | 3.62 |
| | 12 | 265 | 9.58 |
| | 25 | 265 | 14.3 |
| PPS | 16 | 290 | 8.10 |
| PEEK | 12 | 334 | 4.06 |
| PEN | 25 | 265 | 17.64 |
| PBT | 15 | 260 | 11.26 |
| | 25 | 260 | 16.02 |

As described above, the present disclosure provides inventions of aspects as described below.
Item 1. An exterior material for an all-solid-state battery, the exterior material including:
   a laminate including at least a base material layer, a barrier layer, and a heat-sealable resin layer in this order; and
   an insulating layer provided on the heat-sealable resin layer on a side opposite to the base material layer side, in which
   in plan view of an all-solid-state battery in which a battery element including at least a unit cell including a positive active material layer, a negative active material layer, and a solid electrolyte layer laminated between the positive active material layer and the negative active material layer is stored in a packaging formed from the exterior material for an all-solid-state battery, the insulating layer is located so as to cover an entire surface of the positive active material layer in the all-solid-state battery.
Item 2. The exterior material for an all-solid-state battery according to item 1, in which the insulating layer has a melting point of 200°C or higher.
Item 3. An all-solid-state battery in which a battery element including at least a unit cell including a positive active material layer, a negative active material layer, and a solid electrolyte layer laminated between the positive active material layer and the negative active material layer is stored in a packaging formed from an exterior material for an all-solid-state battery, in which
   the exterior material for an all-solid-state battery includes a laminate including at least a base material layer, a barrier layer, and a heat-sealable resin layer in this order, and an insulating layer provided on the heat-sealable resin layer on a side opposite to the base material layer side, and
   the insulating layer is located so as to cover an entire surface of the positive active material layer of the all-solid-state battery in plan view of the all-solid-state battery.
Item 4. A method for producing an all-solid-state battery, the method including a storage step of storing a battery element in a packaging formed from an exterior material for an all-solid-state battery, the battery element including at least a unit cell including a positive active material layer, a negative active material layer, and a solid electrolyte layer laminated between the positive active material layer and the negative active material layer, in which
   the exterior material for an all-solid-state battery includes a laminate including at least a base material layer, a barrier layer, and a heat-sealable resin layer in this order, and an insulating layer provided on the heat-sealable resin layer on a side opposite to the base material layer side, and
   the insulating layer of the exterior material for an all-solid-state battery is located so as to cover an entire surface of the positive active material layer of the all-solid-state battery in plan view of the all-solid-state battery.
Item 5. An insulating member for forming an insulating layer provided on an exterior material for an all-solid-state battery, wherein
   the exterior material includes a laminate including at least a base material layer, a barrier layer, and a heat-sealable resin layer in this order,
   the insulating layer is provided on the heat-sealable resin layer on a side opposite to the base material layer side, and
   the insulating layer is provided so as to cover an entire surface of the positive active material layer of the all-solid-state battery in plan view of the all-solid-state battery.

### DESCRIPTION OF REFERENCE SIGNS

- 1:: Base material layer
- 2:: Adhesive agent layer
- 3:: Barrier layer
- 4:: Heat-sealable resin layer
- 5:: Adhesive layer
- 6:: Surface coating layer
- 10:: Exterior material for all-solid-state battery
- 11:: Insulating layer
- 20:: Negative electrode layer
- 21:: Negative active material layer
- 22:: Negative electrode current collector
- 30:: Positive electrode layer
- 31:: Positive active material layer
- 32:: Positive electrode current collector
- 40:: Solid electrolyte layer
- 50:: Unit cell
- 60:: Terminal
- 70:: All-solid-state battery
- M:: Laminate

## Claims

1. An exterior material for an all-solid-state battery, the exterior material comprising:
a laminate including at least a base material layer, a barrier layer, and a heat-sealable resin layer in this order; and
an insulating layer provided on the heat-sealable resin layer on a side opposite to the base material layer side, wherein
in plan view of an all-solid-state battery in which a battery element including at least a unit cell including a positive active material layer, a negative active material layer, and a solid electrolyte layer laminated between the positive active material layer and the negative active material layer is stored in a packaging formed from the exterior material for an all-solid-state battery, the insulating layer is located so as to cover an entire surface of the positive active material layer in the all-solid-state battery.

2. The exterior material for an all-solid-state battery according to claim 1, wherein the insulating layer has a melting point of 200°C or higher.

3. The exterior material for an all-solid-state battery according to claim 1 or 2, comprising a corrosion-resistant film formed on a surface of the barrier layer.

4. The exterior material for an all-solid-state battery according to any one of claims 1 to 3, wherein when the corrosion-resistant film is analyzed by time-of-flight secondary ion mass spectrometry, a ratio of a peak intensity P_{PO3} derived from PO₃⁻ to a peak intensity P_{CrPO4} derived from CrPO₄⁻ (P_{PO3/CrPO4}) is preferably in a range of 6 or more and 120 or less.

5. The exterior material for an all-solid-state battery according to any one of claims 1 to 4, wherein the laminate has a concave portion having a shape protruding from the heat-sealable resin layer side to the base material layer side, and the insulating layer is disposed in the concave portion.

6. An all-solid-state battery in which a battery element including at least a unit cell including a positive active material layer, a negative active material layer, and a solid electrolyte layer laminated between the positive active material layer and the negative active material layer is stored in a packaging formed from an exterior material for an all-solid-state battery, wherein
the exterior material for an all-solid-state battery includes a laminate including at least a base material layer, a barrier layer, and a heat-sealable resin layer in this order, and an insulating layer provided on the heat-sealable resin layer on a side opposite to the base material layer side, and
the insulating layer is located so as to cover an entire surface of the positive active material layer of the all-solid-state battery in plan view of the all-solid-state battery.

7. A method for producing an all-solid-state battery, the method comprising a storage step of storing a battery element in a packaging formed from an exterior material for an all-solid-state battery, the battery element including at least a unit cell including a positive active material layer, a negative active material layer, and a solid electrolyte layer laminated between the positive active material layer and the negative active material layer, wherein
the exterior material for an all-solid-state battery includes a laminate including at least a base material layer, a barrier layer, and a heat-sealable resin layer in this order, and an insulating layer provided on the heat-sealable resin layer on a side opposite to the base material layer side, and
the insulating layer of the exterior material for an all-solid-state battery is located so as to cover an entire surface of the positive active material layer of the all-solid-state battery in plan view of the all-solid-state battery.
